# FASCICULE DE BREVET EUROPEEN

(11) **EP 3 882 141 B1**
(45) Date de publication et mention de la délivrance du brevet: **10.08.2022**
(21) Numéro de dépôt: 21156826.6
(22) Date de dépôt: 12.02.2021
(51) Int. Cl.: B64C 27/26, B64C 13/18, B64C 27/57, B64C 11/30, B64C 27/82

(54) **PROCÉDÉ ET SYSTÈME DE RÉDUCTION DU BRUIT EN VOL D'UN HÉLICOPTÈRE HYBRIDE PAR GESTION DE L'INCIDENCE DE SON ROTOR PRINCIPAL ET DE LA POUSSÉE DE CHAQUE HÉLICE**
VERFAHREN UND SYSTEM ZUR REDUZIERUNG DER FLUGGERÄUSCHE EINES HYBRIDHUBSCHRAUBERS DURCH STEUERUNG DER ANSTRÖMUNG SEINES HAUPTROTORS UND DES SCHUBS JEDES PROPELLERS
METHOD AND SYSTEM FOR REDUCING NOISE IN FLIGHT OF A HYBRID HELICOPTER BY MANAGEMENT OF THE INCIDENCE OF ITS MAIN ROTOR AND THE THRUST OF EACH PROPELLER

(30) Priorité: 18.03.2020 FR 2002631
(43) Date de publication de la demande: 22.09.2021
(73) Titulaire: Airbus Helicopters, 13725 Marignane Cedex (FR)
(72) Inventeur: GUNTZER, Frédéric, 13180 Gignac La Nerthe (FR); EGLIN, Paul, 13830 Roquefort La Bedoule (FR)
(74) Mandataire: GPI Brevets

(56) Documents cités:
- EP-A1- 1 547 920
- WO-A1-2016/053991
- US-A- 5 437 419
- US-A1- 2005 045 762

## Description

La présente invention est du domaine des aides au pilotage des hélicoptères hybrides.

La présente invention concerne un procédé et un système de réduction du bruit en vol d'un hélicoptère hybride par gestion de l'incidence de son rotor principal et de la poussée de ses hélices d'avancement ainsi qu'un hélicoptère hybride équipé d'un tel système.

Le projet menant à cette invention a reçu un financement du programme de recherche et d'innovation Horizon 2020 de l'Union Européenne, dans le cadre de la convention de subvention CleanSky 2 N° GAM-FRC-2014-001 Issue E.

Un hélicoptère hybride est un type particulier de giravion comportant un fuselage et au moins un rotor principal assurant au moins partiellement la sustentation et/ou l'avancement de l'hélicoptère hybride ainsi qu'une ou plusieurs hélices d'avancement assurant au moins partiellement l'avancement de l'hélicoptère hybride. Un hélicoptère hybride peut aussi comporter au moins deux surfaces dénommées « ailes » assurant au moins partiellement la sustentation de l'hélicoptère hybride et au moins un empennage horizontal orientable totalement ou partiellement et permettant de contrôler l'équilibre longitudinal de l'hélicoptère hybride.

Un hélicoptère hybride comporte par exemple un unique rotor principal, deux ailes agencées respectivement de part et d'autre transversalement du fuselage et deux hélices d'avancement, placées respectivement sur chaque aile. Le rotor principal et chaque hélice d'avancement peuvent être entraînés en rotation par une même installation motrice du giravion. Les deux hélices sont aussi susceptibles d'assurer une fonction anticouple et ainsi de permettre de contrôler les mouvements en lacet de ce giravion. Chaque hélice d'avancement peut être tractive ou propulsive.

Lors de la rotation d'un rotor, une extrémité libre de chaque pale de ce rotor décrit un cône rotor, la base de ce cône rotor étant dénommée « disque rotor ». L'incidence du disque rotor d'un rotor est égale à l'angle entre ce disque rotor et la direction d'avancement du giravion.

Dans un souci de simplification, on utilisera par la suite uniquement le terme « hélice » pour désigner une hélice d'avancement et le terme « rotor » pour désigner un rotor principal. De même, on utilisera par la suite l'expression « incidence du disque rotor » pour désigner l'incidence du disque rotor du rotor principal.

Un hélicoptère hybride dispose, grâce à la présence d'au moins une hélice, d'un degré de liberté supplémentaire par rapport à un hélicoptère conventionnel pour le pilotage et la manœuvre du giravion. En effet, la poussée totale nécessaire à l'avancement de l'hélicoptère hybride peut être partagée entre chaque hélice et chaque rotor. Un tel partage permet également d'influencer l'incidence du disque rotor de chaque rotor, sans l'adjonction d'un dispositif mécanique ou aérodynamique dédié. Pour rappel, sur un hélicoptère conventionnel, l'incidence du disque rotor du rotor est imposée par les conditions de vol et notamment par la pente aérodynamique et la vitesse par rapport à l'air de l'hélicoptère.

La poussée de chaque hélice de l'hélicoptère hybride est contrôlée via une composante de pas moyen de ses deuxièmes pales alors que l'incidence de chaque rotor et la force aérodynamique qu'il génère sont contrôlées via les pas collectif et cycliques de ses premières pales. Une commande de pas collectif permet de piloter l'amplitude de la force aérodynamique générée par chaque rotor et une commande de pas cyclique permet d'incliner le disque rotor et, de fait, d'orienter cette force aérodynamique. En fonction de cette orientation, la force aérodynamique de chaque rotor se décompose en une force de sustentation contribuant à la sustentation de l'hélicoptère hybride et une poussée s'ajoutant à la poussée de chaque hélice afin de contribuer à l'avancement de l'hélicoptère hybride. En fonction des phases de vol de l'hélicoptère hybride et en particulier à partir d'une vitesse d'avancement significative, les ailes contribuent également à la sustentation de l'hélicoptère hybride via une force de portance fonction notamment de la vitesse d'avancement de l'hélicoptère hybride.

La combinaison des commandes de vol de chaque hélice et de chaque rotor peut rendre la gestion des commandes de l'hélicoptère hybride délicate sans aide au pilotage.

Par ailleurs, lors des vols d'un hélicoptère qu'il soit conventionnel ou hybride, des phénomènes d'interactions peuvent se produire entre les pales en rotation d'un rotor et des tourbillons d'air générés par d'autres pales de ce rotor. En effet, chaque pale du rotor a tendance à provoquer l'apparition d'un sillage tourbillonnaire qui peut ensuite, sous certaines incidences du rotor, être traversé par les autres pales de ce rotor. Ces interactions entre les pales et le sillage tourbillonnaire sont alors génératrices de bruit, par exemple en vol d'approche et sous certaines incidences du disque rotor.

Ces interactions entre les pales d'un rotor et un sillage tourbillonnaire sont connues sous la désignation en langue anglaise « Blade Vortex Interaction » et l'acronyme *BVI,* et sont reconnues comme une des contributions majeures au bruit total généré par un hélicoptère conventionnel.

En outre, des interactions spécifiques à l'hélicoptère hybride peuvent également se produire entre un sillage tourbillonnaire généré par le rotor et les pales des hélices en rotation. Ces interactions peuvent alors être génératrices de bruit, là encore sous certaines incidences du rotor.

De plus, d'autres interactions peuvent également se produire entre le sillage tourbillonnaire généré par chaque pale du rotor et les éléments aérodynamiques situés à l'arrière de l'hélicoptère, tels que la poutre de queue et des empennages horizontaux et/ou verticaux. Ces interactions ne sont pas dans ce cas génératrices de nuisances sonores, mais peuvent provoquer des vibrations de ces éléments aérodynamiques arrières pouvant perturber le pilotage de l'hélicoptère.

Sur un hélicoptère conventionnel, des solutions ont été envisagées pour limiter l'intensité des bruits générés par de telles interactions *BVI.*

Par exemple, la publication de F.H. Schmitz, « Réduction of Blade-Vortex Interaction Noise through X-Force Control », NASA Technical Mémorandum 110371, September 1995, décrit des dispositifs destinés à modifier l'incidence du disque rotor pour une pente et une vitesse de vol fixées, en conditions de vol stabilisé. Ces dispositifs visent notamment à générer au moins une force aérodynamique parallèle à la direction de déplacement du giravion afin de modifier l'équilibre du giravion et, par suite, de modifier l'incidence du disque rotor de sorte à tenter de limiter les bruits émis. Cette force aérodynamique parallèle à la direction de déplacement du giravion peut être une traînée aérodynamique ou bien une force de poussée.

Les documents US 5478029 et US 5437419 décrivent plus précisément des exemples de tels dispositifs. Un dispositif visant à augmenter la traînée aérodynamique du giravion peut comporter des obstacles aérodynamiques, tels que des volets par exemple, déployables et/ou orientables dans le flux d'air balayant le giravion. Un dispositif générant une force de poussée peut comporter par exemple deux hélices agencées de part et d'autre du fuselage. Ces deux hélices génèrent une force de poussée qui peut être constante quelle que soit la vitesse du giravion, et orientée vers l'avant ou vers l'arrière du giravion, provoquant alors une variation constante de l'incidence du disque rotor du giravion.

Cependant, ces dispositifs sont pénalisants pour le fonctionnement du giravion, conduisant à une augmentation significative de la traînée aérodynamique du giravion, en particulier en phase d'approche, ainsi qu'à une augmentation importante de la masse du giravion. De plus, l'implémentation de tels dispositifs peut s'avérer complexe.

Par ailleurs, le document US 7448571 décrit un giravion muni d'un rotor, de deux ailes et d'une hélice de propulsion. L'hélice de propulsion assure l'avancement du giravion et les ailes assurent la majeure partie de sa portance en vol de croisière, le rotor étant alors entraîné en rotation par le flux d'air incident. De plus, le mât du rotor est inclinable vers l'avant ou l'arrière du giravion afin de modifier l'incidence du disque rotor de sorte à maintenir un régime souhaité de rotation du rotor, en particulier un régime minimum.

L'art antérieur comporte également le document WO 2016/053991 décrivant un aéronef comprenant un fuselage, deux rotors principaux coaxiaux et contrarotatif et une hélice de poussée positionné à l'extrémité d'une poutre de queue. Cet aéronef propose, pour réduire les bruits générés lors de certaines phases de vol de réduire les vitesses de rotation des rotors principaux et/ou de l'hélice de poussée.

Le document EP 1547920 décrit un procède et un dispositif visant à réduire les vibrations engendrées sur la structure d'un giravion par un écoulement aérodynamique à travers le rotor principal de ce giravion et par un écoulement aérodynamique le long de son fuselage. Le dispositif mesure les vibrations engendrées sur la structure et calcule à partir de ces mesures une variation de l'incidence d'un empennage du giravion susceptible de générer une force s'opposant aux vibrations verticales et applique cette variation d'incidence sur l'empennage afin de réduire ces vibrations.

Enfin, le document US 2005/045762 décrit un aéronef convertible comportant un unique rotor basculant fixé au-dessus du fuselage ainsi qu'un rotor anticouple agencé à l'extrémité d'une poutre de queue, une hélice agencé à l'arrière du fuselage et deux ailes. Le rotor basculant est fixé de manière pivotante et coulissante longitudinalement vis-à-vis du fuselage. En vol de croisière horizontale, le rotor basculant est avancé au maximum à l'avant du fuselage et pivoté de sorte que ses pales puissent tourner devant le fuselage. En mode vol ascensionnel, le rotor basculant est positionné au-dessus du fuselage. Ces configurations particulières du rotor principal et des rotors auxiliaires permettent de limiter les bruits provoqués par le sillage tourbillonnaire généré par les pales du rotor basculant en vol.

La présente invention a alors pour objet de proposer un procédé et un système destiné à un hélicoptère hybride et visant à réduire les bruits provoqués par le sillage tourbillonnaire généré par chaque pale d'un rotor de l'hélicoptère hybride en vol, et notamment les interactions *BVI.*

La présente invention vise également un hélicoptère hybride équipé d'un tel système.

La présente invention a ainsi pour objet un procédé de réduction de bruit en vol pour un hélicoptère hybride. Cet hélicoptère hybride comporte :
- au moins un rotor muni d'une pluralité de premières pales et assurant au moins partiellement la sustentation et/ou l'avancement de l'hélicoptère hybride,
- au moins une hélice munie d'une pluralité de deuxièmes pales et assurant au moins partiellement l'avancement de l'hélicoptère hybride,
- un dispositif de pilotage automatique de l'hélicoptère hybride, et
- au moins un calculateur.

Un tel hélicoptère hybride peut également comporter un fuselage, au moins deux ailes assurant au moins partiellement la sustentation de l'hélicoptère hybride, au moins un dispositif de visualisation et au moins un capteur destiné à la mesure ou à la détermination des conditions de vol de l'hélicoptère hybride.

Le calculateur peut être par exemple dédié à la réalisation de ce procédé selon l'invention ou bien être partagé pour réaliser d'autres fonctions de l'hélicoptère hybride et intégré à ce titre à un système avionique de l'hélicoptère hybride. Le calculateur peut comporter par exemple au moins un processeur et au moins une mémoire, au moins un circuit intégré, au moins un système programmable ou bien au moins un circuit logique, ces exemples ne limitant pas la portée donnée à l'expression « calculateur ». La mémoire peut par exemple stocker un ou plusieurs algorithmes afin de réaliser le procédé selon l'invention ainsi qu'une ou plusieurs bases de données.

Le procédé selon l'invention est remarquable en ce qu'il comporte les étapes suivantes :
- détermination des conditions de vol de l'hélicoptère hybride avec au moins un capteur de l'hélicoptère hybride, lesdites conditions de vol comportant une vitesse par rapport à l'air de l'hélicoptère hybride et une pente aérodynamique d'une trajectoire suivie par l'hélicoptère hybride,
- détermination d'une première valeur d'une première caractéristique de ladite au moins une hélice selon une première base de données en fonction desdites conditions de vol,
- détermination d'une seconde valeur d'une seconde caractéristique dudit au moins un rotor principal selon une deuxième base de données en fonction de ladite première valeur de la première caractéristique de ladite au moins une hélice de sorte à limiter une génération de bruit due à un sillage tourbillonnaire généré par chaque première pale en rotation dudit au moins un rotor principal, et
- réalisation d'une phase de vol stabilisée de l'hélicoptère hybride en appliquant la première valeur de la première caractéristique à ladite au moins une hélice et la seconde valeur de la seconde caractéristique audit au moins un rotor principal.

De la sorte, la première valeur de la première caractéristique de chaque hélice et la seconde valeur de la seconde caractéristique dudit au moins un rotor permettent avantageusement de partager la poussée totale nécessaire à l'avancement de l'hélicoptère hybride afin que chaque rotor ait une incidence optimisée en fonction des conditions de vol. La maîtrise de l'incidence du disque rotor permet de limiter la génération de bruit due au sillage tourbillonnaire généré par chaque première pale du rotor.

Grâce à cette incidence optimisée de chaque rotor, le sillage tourbillonnaire de chaque première pale est ainsi dirigé de sorte à avoir un contact limité ou nul avec les autres premières pales de ce rotor limitant ainsi l'apparition d'interactions *BVI* génératrices de bruits importants et pouvant être désagréables pour l'environnement de l'hélicoptère hybride.

Grâce à cette incidence optimisée de chaque rotor, le sillage tourbillonnaire de chaque première pale du rotor peut également être dirigé de sorte à avoir un contact limité ou nul avec les deuxièmes pales de chaque hélice limitant ainsi l'apparition d'interactions entre ce sillage tourbillonnaire et les deuxièmes pales en rotation, ces interactions étant également génératrices de bruits.

Le sillage tourbillonnaire de chaque première pale du rotor peut également être dirigé de sorte à avoir un contact limité ou nul avec des éléments aérodynamiques arrières de l'hélicoptère hybride, tels que des empennages horizontaux et/ou verticaux ainsi que la poutre de queue afin de limiter l'apparition de vibrations aux niveaux de ces éléments aérodynamiques arrières.

Par exemple, pour un hélicoptère hybride comportant un rotor et deux hélices situées sous le rotor, une incidence optimisée du rotor peut permettre de limiter les interactions et avantageusement de diriger chaque sillage tourbillonnaire sensiblement entre les premières pales de chaque rotor et les deuxièmes pales de chaque hélice.

La direction prise par un sillage tourbillonnaire peut être fonction d'une part de l'incidence du disque rotor et d'autre part de la pente aérodynamique de la trajectoire d'avancement de l'hélicoptère hybride. Avantageusement, chaque première valeur de la première caractéristique de chaque hélice issue de la première base de données est définie en fonction de la pente aérodynamique ainsi que de la vitesse d'avancement par rapport à l'air de l'hélicoptère hybride.

Dans une deuxième base de données, à chaque première valeur de la première caractéristique d'une hélice est associée une seconde valeur de la seconde caractéristique de chaque rotor de sorte que l'application simultanée de la première valeur de la première caractéristique à chaque hélice et de la seconde valeur de la seconde caractéristique à chaque rotor permet d'orienter le sillage tourbillonnaire généré par chaque première pale en rotation afin de limiter la génération de bruit due à ce sillage tourbillonnaire. La première base de données et la deuxième base de données peuvent éventuellement être fusionnées de sorte à former une seule et même base de données.

Les premières valeurs relatives à la première caractéristique de chaque hélice ainsi que les secondes valeurs de la seconde caractéristique de chaque rotor principal associées respectivement aux premières valeurs de la première caractéristique peuvent être déterminées par calcul en faisant intervenir un modèle de mécanique du vol définissant les équilibres de l'hélicoptère hybride en fonction de différentes conditions de vol et la vitesse totale du flux d'air à travers le rotor ainsi que les positions de commandes de vol de l'hélicoptère hybride. Ce calcul peut être réalisé sous la forme de simulations numériques représentant notamment le sillage tourbillonnaire généré par chaque première pale et sa propagation en direction des autres premières pales et des deuxièmes pales, ainsi qu'éventuellement en direction des éléments aérodynamiques arrières de l'hélicoptère hybride.

Les résultats de ces simulations numériques, et en particulier leurs effets sur les interactions du sillage tourbillonnaire et les bruits générés peuvent éventuellement être ensuite validés par des essais en vol.

Ces premières valeurs de la première caractéristique et ces secondes valeurs de la seconde caractéristique peuvent également être déterminées suite à des campagnes d'essais en vol en remplacement des simulations numériques.

La première base de données et la deuxième base de données peuvent être établies lors d'une étape préliminaire d'établissement de bases de données de ce procédé. Cette étape préliminaire peut par exemple être réalisée lors de la mise au point de l'hélicoptère hybride ou après cette mise au point.

Cette première base de données prend en compte les conditions de vol de l'hélicoptère hybride ainsi que ses spécificités tant géométriques qu'aérodynamiques et mécaniques. Chaque base de données peut donc être dédiée et spécifique à chaque type d'hélicoptère hybride.

La première base de données peut définir un réseau de premières courbes optimisées pour limiter au minimum les interactions du sillage tourbillonnaire généré par chaque première pale d'un rotor. Chaque première courbe optimisée met en relation la première caractéristique de chaque hélice et la vitesse par rapport à l'air de l'hélicoptère hybride, chaque première courbe optimisée correspondant à une pente aérodynamique de la trajectoire de l'hélicoptère hybride.

La première base de données peut aussi comporter un réseau de plages optimisées, chaque plage optimisée mettant en relation la première caractéristique de chaque hélice et la vitesse par rapport à l'air de l'hélicoptère hybride, chaque plage optimisée correspondant à une pente aérodynamique de la trajectoire de l'hélicoptère hybride.

Une première limite d'une plage optimisée, par exemple la limite supérieure, peut correspondre aux premières valeurs maximales de la première caractéristique au dessus desquelles se produit une interaction *BVI* entre les premières pales et le sillage tourbillonnaire alors qu'une seconde limite de cette plage optimisée, par exemple la limite inférieure, peut correspondre aux premières valeurs minimales en dessous desquelles se produit une interaction entre les deuxièmes pales et le sillage tourbillonnaire.

La première base de données peut comporter des tableaux de valeurs, une suite d'instructions mathématiques ou encore une ou plusieurs équations correspondant à ces courbes optimisées ou bien aux plages optimisées.

La première base de données peut également comporter un algorithme de simulation numérique mettant en relation notamment la première caractéristique de chaque hélice, la vitesse par rapport à l'air de l'hélicoptère hybride et la pente aérodynamique de la trajectoire de l'hélicoptère hybride.

De même, la deuxième base de données peut définir un réseau de secondes courbes, chaque seconde courbe mettant en relation la première caractéristique de chaque hélice et la seconde caractéristique de chaque rotor, chaque seconde courbe correspondant à une pente aérodynamique de la trajectoire de l'hélicoptère hybride.

Là encore, la deuxième base de données peut comporter des tableaux de valeurs, une suite d'instructions mathématiques ou encore une ou plusieurs équations correspondant à ces secondes courbes.

La deuxième base de données peut aussi comporter un algorithme de simulation numérique mettant en relation notamment la première caractéristique de chaque hélice, la seconde caractéristique de chaque rotor et la pente aérodynamique de la trajectoire de l'hélicoptère hybride ainsi qu'éventuellement la vitesse par rapport à l'air de l'hélicoptère hybride.

Le procédé selon l'invention utilise lors de son application les conditions de vol déterminées lors de l'étape de détermination des conditions de vol de l'hélicoptère hybride. Ces conditions de vol comportent notamment :
- la vitesse par rapport à l'air de l'hélicoptère hybride déterminée par exemple par l'intermédiaire d'un dispositif muni d'un tube de Pitot, un anémomètre ou de tout autre dispositif adapté, et
- la pente aérodynamique de la trajectoire suivie par l'hélicoptère hybride déterminée par exemple par l'intermédiaire d'une centrale inertielle ou de tout autre dispositif adapté.

La vitesse d'avancement par rapport à l'air de l'hélicoptère hybride ainsi que la pente aérodynamique de sa trajectoire sont indispensables pour déterminer de la première valeur de la première caractéristique et la seconde valeur de la seconde caractéristique.

De plus, des conditions de vol complémentaires peuvent être utilisées afin de corriger éventuellement cette première valeur de la première caractéristique et cette seconde valeur de la seconde caractéristique par rapport aux conditions de vols prises en compte dans la première et la deuxième bases de données.

Ces conditions de vol complémentaires de l'hélicoptère hybride peuvent comporter par exemple :
- la masse courante de l'hélicoptère hybride,
- une température extérieure à l'hélicoptère hybride, et
- une pression atmosphérique extérieure à l'hélicoptère hybride.

La masse courante de l'hélicoptère hybride peut être déterminée de façon connue, par exemple par l'intermédiaire du calculateur soustrayant la masse du carburant consommé depuis le décollage de l'hélicoptère hybride à la masse effective de l'hélicoptère hybride au moment de son décollage. La masse courante de l'hélicoptère hybride peut également être déterminée en vol par un dispositif dédié.

La température extérieure et la pression atmosphérique extérieure à l'hélicoptère hybride sont mesurées, par exemple par l'intermédiaire de capteurs appropriés embarqués, par exemple un thermomètre et un capteur de pression.

Ensuite, la première valeur de la première caractéristique de chaque hélice peut être déterminée par le calculateur selon la première base de données. Par exemple, la première valeur est déterminée en fonction de la vitesse par rapport à l'air de l'hélicoptère hybride sur une première courbe correspondant à la pente aérodynamique courante de la trajectoire de l'hélicoptère hybride.

Lorsque la première base de données comporte des plages optimisées, la première valeur peut être déterminée dans une plage optimisée proche de sa seconde limite si on souhaite privilégier un éloignement de l'interaction *BVI* ou bien de sa première limite si on souhaite privilégier un éloignement de l'interaction entre les deuxièmes pales et le sillage tourbillonnaire. Dans ce but, des niveaux de bruit dû à ces interactions peuvent être déterminés selon les phases de vol. Ensuite, le choix de la limite à approcher est réalisé en fonction de ces niveaux de bruit et de l'interaction la plus bruyante selon la phase de vol courante.

La première valeur de la première caractéristique peut aussi être déterminée afin de prendre en compte les interactions entre le sillage tourbillonnaire et les éléments aérodynamiques arrières que peut comporter l'hélicoptère hybride. Dans ce cas, le calculateur prend en compte un compromis entre les différentes interactions possibles pour déterminer la première valeur de la première caractéristique.

Ensuite, la seconde valeur de la seconde caractéristique peut être déterminée par le calculateur selon la deuxième base de données et en fonction de la première valeur de la première caractéristique précédemment déterminée.

La première caractéristique de chaque hélice peut correspondre directement à un ordre de commande de vol associée à chaque hélice par exemple un ordre de commande de pas des deuxièmes pales de chaque hélice. La première caractéristique de chaque hélice peut aussi être un ordre de commande d'une première poussée exercée par chaque hélice et contribuant partiellement à l'avancement de l'hélicoptère hybride.

La seconde caractéristique de chaque rotor peut être l'incidence du disque rotor de chaque rotor. Cette incidence du disque rotor n'est pas associée directement à un ordre de commande de vol, mais peut être pilotée par l'intermédiaire de deux commandes de vol associées à chaque rotor, à savoir les commandes de pas cyclique et de pas collectif de chaque rotor. La seconde caractéristique de chaque rotor peut aussi être un ordre de commande d'une seconde poussée exercée par chaque rotor et contribuant partiellement à l'avancement de l'hélicoptère hybride. Par ailleurs, le procédé selon l'invention est appliqué durant une phase de vol stabilisée afin que l'application de la première valeur de la première caractéristique à chaque hélice et de la seconde valeur de la seconde caractéristique à chaque rotor n'entrave pas ou ne perturbe pas la réalisation d'une manœuvre ou d'une phase de vol particulière de l'hélicoptère hybride.

Une phase de vol stabilisée est réalisée généralement avec une pente aérodynamique de la trajectoire suivie sensiblement constante. Dès lors, une phase de vol stabilisée peut comporter notamment un vol en palier horizontal, à savoir à pente aérodynamique sensiblement nulle, un vol en montée avec une pente aérodynamique non nulle positive sensiblement constante ou un vol en descente avec une pente aérodynamique non nulle négative sensiblement constante.

En outre, une phase de vol stabilisée peut être caractérisée par un facteur de charge sensiblement constant de l'hélicoptère hybride, une vitesse par rapport à l'air sensiblement constante, un angle de tangage et un angle de roulis sensiblement constants et une vitesse verticale sensiblement constante. De plus, lorsque l'hélicoptère hybride est sous pilotage automatique, une phase de vol stabilisée peut être caractérisée par la détection qu'un pilote n'exerce aucune action sur une commande de vol de l'hélicoptère hybride.

Le procédé de réduction de bruit en vol pour un hélicoptère hybride selon l'invention peut de plus comprendre une ou plusieurs des caractéristiques qui suivent, prises seules ou en combinaison.

Selon un aspect, le procédé de réduction du bruit selon l'invention peut être engagé manuellement par un occupant de l'hélicoptère hybride, en particulier le pilote ou le copilote, en manœuvrant un dispositif d'engagement. De la sorte, cet occupant de l'hélicoptère hybride choisit s'il souhaite engager une phase de réduction du bruit généré par l'hélicoptère hybride, et en particulier par le sillage tourbillonnaire des premières pales de son rotor, notamment lorsqu'il réalise un vol d'approche ou bien vole au dessus d'une zone habitée par exemple. Un dispositif d'engagement comporte par exemple un bouton, un interrupteur ou encore un écran tactile agencé sur un tableau de bord de l'hélicoptère hybride et transmettant un signal au calculateur, ce signal pouvant être analogique ou numérique ainsi qu'électrique ou optique par exemple.

Ce procédé peut aussi être engagé automatiquement, en fonction de la position de l'hélicoptère hybride. L'hélicoptère hybride continue alors la phase de vol courante en appliquant le procédé selon l'invention afin de réduire les bruits générés par l'hélicoptère hybride, et en particulier par le sillage tourbillonnaire des premières pales de son rotor.

Par exemple, le procédé peut être engagé automatiquement dès que l'hélicoptère hybride s'approche d'une zone urbaine. Une telle proximité avec une zone urbaine peut être obtenue par la connaissance de la position de l'hélicoptère hybride dans un repère terrestre, déterminée par exemple par un récepteur GNSS pour la désignation en langue anglaise « Global Navigation Satellites System », et une troisième base de données comportant les positions des différentes zones urbaines susceptibles d'être survolées. En conséquence, le calculateur peut déterminer, en utilisant les coordonnées de l'hélicoptère hybride et la troisième base de données, que l'hélicoptère hybride se rapproche d'une zone urbaine et que le procédé doit alors être engagé.

Le procédé peut également être engagé automatiquement en fonction de la distance séparant l'hélicoptère hybride et le sol survolé, cette distance étant égale à une hauteur mesurée parallèlement à une direction verticale, typiquement parallèle à la direction de la pesanteur. Le procédé peut par exemple être engagé automatiquement lorsque la distance entre l'hélicoptère hybride et le sol survolé est inférieure à un seuil de hauteur, par exemple égal à 400 mètres. Une telle hauteur peut être caractéristique notamment de la réalisation d'une phase d'approche en vue d'un atterrissage. Cette distance est par exemple déterminée par une radiosonde, un radioaltimètre ou un radar altimétrique que comporte l'hélicoptère hybride.

Les deux caractéristiques précédentes peuvent également être combinées et les deux conditions évoquées validées afin d'engager automatiquement le procédé selon l'invention.

La vitesse d'avancement de l'hélicoptère hybride peut également être un critère à prendre en compte pour l'engagement du procédé selon l'invention. En effet, les interactions entre le sillage tourbillonnaire généré par un rotor en rotation et les pales de ce rotor ou d'une hélice n'apparaissent pas lorsque l'hélicoptère hybride est en vol stationnaire ou bien vole avec une faible vitesse d'avancement. Dès lors, il peut être inutile d'appliquer le procédé selon l'invention lorsque l'hélicoptère hybride vole avec une vitesse par rapport à l'air inférieur à un seuil de vitesse. Le seuil de vitesse est par exemple égale à 40 nœuds, soit 74,08 kilomètres par heure.

Selon un aspect, le procédé selon l'invention peut comporter une étape supplémentaire de vérification que l'hélicoptère hybride est dans une phase de vol stabilisée. Cette étape de vérification peut être réalisée entre l'étape de détermination des conditions de vol de l'hélicoptère hybride et l'étape de détermination d'une plage optimisée afin de s'assurer que l'hélicoptère hybride est bien dans une phase de vol stabilisée et que le procédé selon l'invention peut être appliqué. Cette étape de vérification utilise les caractéristiques de la phase de vol précédemment déterminées lors de l'étape de détermination des conditions de vol de l'hélicoptère hybride et confirme, par l'intermédiaire du calculateur, que l'hélicoptère hybride est bien dans une phase de vol stabilisée. L'étape de vérification peut utiliser un ou plusieurs des paramètres suivants de l'hélicoptère hybride :
- une pente aérodynamique sensiblement constante, que cette pente aérodynamique soit nulle, positive ou négative,
- un facteur de charge sensiblement constant,
- une vitesse par rapport à l'air sensiblement constante,
- un angle de tangage et un angle de roulis sensiblement constant,
- une vitesse verticale sensiblement constante, et
- la détection qu'aucune action n'est entreprise par un pilote sur une commande de vol de l'hélicoptère hybride.

Selon un aspect, le procédé peut comporter une étape supplémentaire d'inhibition du procédé lorsque l'hélicoptère hybride n'est plus dans une phase de vol stabilisée et réalise par exemple une manœuvre pour changer de cap ou de trajectoire ou encore en vue d'un atterrissage. Cette étape d'inhibition est réalisée par l'intermédiaire du calculateur et utilise des conditions de vol de l'hélicoptère hybride précédemment déterminées lors de l'étape de détermination des conditions de vol de l'hélicoptère hybride.

Une phase de vol non stabilisée est établie dès qu'une des conditions suivantes est réalisée :
- la pente aérodynamique n'est pas constante,
- un facteur de charge n'est pas constant,
- la vitesse par rapport à l'air n'est pas constante,
- l'angle de tangage ou l'angle de roulis n'est pas constant,
- la vitesse verticale n'est pas constante, ou
- une action entreprise par un pilote sur une commande de vol de l'hélicoptère hybride est détectée.

Lorsqu'au moins une des conditions précédentes est réalisée, l'étape d'inhibition du procédé peut être réalisée et le procédé est gelé afin de ne pas interférer avec le pilotage du giravion.

Selon un aspect, l'étape de réalisation d'une phase de vol stabilisée de l'hélicoptère hybride peut comporter une ou plusieurs sous-étapes.

Par exemple, l'étape de réalisation d'une phase de vol stabilisée peut comporter la sous-étape suivante pour une réalisation automatique de la phase de vol stabilisée :
- commande automatique de chaque hélice selon la première valeur de la première caractéristique et de chaque rotor selon la seconde valeur de la seconde caractéristique par l'intermédiaire du dispositif de pilotage automatique de l'hélicoptère hybride.

De la sorte, le dispositif de pilotage automatique de l'hélicoptère hybride, par exemple un pilote automatique, utilise la première valeur de la première caractéristique de chaque hélice et la seconde valeur de la seconde caractéristique de chaque rotor déchargeant ainsi le pilote de la gestion de l'incidence de chaque rotor pour la réalisation de la phase de vol stabilisée.

Dans ce but et selon une première variante du procédé selon l'invention, le dispositif de pilotage automatique de l'hélicoptère hybride peut utiliser directement la première valeur de la première caractéristique comme première consigne à respecter pour chaque hélice et la seconde valeur de la seconde caractéristique comme seconde consigne à respecter pour chaque rotor. Le dispositif de pilotage automatique ajuste alors d'une part la commande de pas des deuxièmes pales de chaque hélice et d'autre part les commandes de pas cyclique et de pas collectif des premières pales de chaque rotor afin de respecter respectivement chacune de ces consignes lors de cette étape.

Selon une seconde variante, le dispositif de pilotage automatique de l'hélicoptère hybride peut utiliser d'une part un ordre de commande de pas des deuxièmes pales comme première consigne de chaque hélice et des ordres de commande de pas cyclique et de commande de pas collectif des premières pales comme secondes consignes à respecter pour chaque rotor.

Dans ce cas, cette étape d'application automatique peut comporter les sous-étapes suivantes :
- détermination d'une première consigne de commande de pas des deuxièmes pales de chaque hélice en fonction de la première valeur de la première caractéristique,
- détermination de secondes consignes de commande de pas cyclique et de commande de pas collectif des premières pales de chaque rotor en fonction de la seconde valeur de la seconde caractéristique, et
- commande automatique de chaque hélice selon la première consigne de commande de pas des deuxièmes pales et de chaque rotor selon les secondes consignes de commande de pas cyclique et de commande de pas collectif des premières pales par l'intermédiaire du dispositif de pilotage automatique de l'hélicoptère hybride.

La première consigne peut être égale à la première valeur de la première caractéristique lorsque la première caractéristique est un ordre de commande de pas des deuxièmes pales de chaque hélice. Lorsque la première caractéristique n'est pas le pas des deuxièmes pales de chaque hélice, la première consigne peut être associée à cette première valeur de la première caractéristique dans la première base de données. Cette première consigne peut également être déterminée par l'intermédiaire du calculateur, en fonction de la première valeur de la première caractéristique et des conditions de vol déterminées lors de l'étape de détermination des conditions de vol de l'hélicoptère hybride, en particulier des conditions atmosphériques, à savoir la température extérieure à l'hélicoptère hybride et la pression atmosphérique à proximité de l'hélicoptère hybride.

Les secondes consignes comportent une seconde consigne de commande de pas cyclique et une seconde consigne de commande de pas collectif des premières pales de chaque rotor déterminées par l'intermédiaire du calculateur, en fonction de la seconde valeur de la seconde caractéristique et des conditions de vol déterminées lors de l'étape de détermination des conditions de vol de l'hélicoptère hybride, en particulier des conditions atmosphériques, et éventuellement de la deuxième base de données.

Lorsque la seconde caractéristique est l'incidence de chaque rotor, la seconde consigne de commande de pas cyclique peut être associée à cette seconde valeur de la seconde caractéristique dans la deuxième base de données. La seconde consigne de commande de pas cyclique peut également être déterminée par l'intermédiaire du calculateur, en fonction de la seconde valeur de la seconde caractéristique et des conditions de vol déterminées lors de l'étape de détermination des conditions de vol de l'hélicoptère hybride.

Dans les deux cas, la seconde consigne de commande de pas collectif est ensuite déterminée par l'intermédiaire du calculateur, en fonction de la seconde consigne de commande de pas cyclique, de la seconde valeur de la seconde caractéristique et des conditions de vol déterminées lors de l'étape de détermination des conditions de vol de l'hélicoptère hybride afin de conserver une force de portance générée par chaque rotor sensiblement identique à la force de portance initiale exercée par chaque rotor avant l'engagement du procédé. Cette force de portance initiale peut être déterminée de façon connue lors de l'étape de détermination des conditions de vol de l'hélicoptère hybride.

Lorsque la seconde caractéristique est un ordre de commande de la seconde poussée exercée par chaque rotor, la seconde consigne de commande pas cyclique et la seconde consigne de commande pas collectif peuvent être déterminées simultanément par l'intermédiaire du calculateur, en fonction de la seconde valeur de la seconde caractéristique, de la force aérodynamique initiale exercée par chaque rotor avant l'engagement du procédé et des conditions de vol déterminées lors de l'étape de détermination des conditions de vol de l'hélicoptère hybride.

De la sorte, l'application des secondes consignes à chaque rotor ainsi déterminées permet à chaque rotor de fournir la seconde poussée et la force de portance requises. De même, l'application de la première consigne à chaque hélice ainsi déterminée permet à chaque hélice de fournir la première poussée requise. En conséquence, l'hélicoptère hybride réalise la phase de vol stabilisée en respectant la seconde valeur de la seconde caractéristique de chaque rotor ainsi que la première valeur de la première caractéristique de chaque hélice, limitant avantageusement de la sorte l'apparition de bruits générés par le sillage tourbillonnaire généré par chaque première pale de chaque rotor.

Eventuellement, le pilote de l'hélicoptère hybride peut à tout moment reprendre en main les commandes de l'hélicoptère hybride afin de diriger lui-même le vol de l'hélicoptère hybride.

Selon un autre exemple, l'étape de réalisation de la phase de vol stabilisée peut comporter les deux sous-étapes suivantes pour une réalisation manuelle de la phase de vol stabilisée par un pilote de l'hélicoptère hybride :
- détermination d'une première consigne à appliquer à chaque hélice en fonction de la première valeur de la première caractéristique,
- détermination d'au moins une seconde consigne à appliquer à chaque rotor en fonction de la seconde valeur de la seconde caractéristique, et
- affichage sur un dispositif de visualisation de l'hélicoptère hybride d'une première consigne à appliquer à chaque hélice et d'au moins une seconde consigne à appliquer à chaque rotor.

Dans ce cas, le pilote de l'hélicoptère hybride peut visualiser sur le dispositif de visualisation une première consigne à appliquer à chaque hélice et au moins une seconde consigne à appliquer à chaque rotor. Le pilote peut ensuite piloter manuellement l'hélicoptère hybride selon la phase de vol stabilisée en appliquant ces consignes simultanément et respectivement à chaque hélice et à chaque rotor afin de limiter les bruits générés par le sillage tourbillonnaire généré par chaque première pale de chaque rotor.

La première consigne peut être égale à la première valeur de la première caractéristique et ladite au moins une seconde consigne peut comporter une seule seconde consigne égale à la seconde valeur de la seconde caractéristique. Dans ce cas, le pilote de l'hélicoptère hybride agit d'une part sur la commande de pas des deuxièmes pales de chaque hélice afin de respecter la première consigne et d'autre part sur les commandes de pas cyclique et de pas collectif de chaque rotor afin de respecter la seconde consigne et de conserver une force de portance générée par chaque rotor sensiblement identique à la force de portance initiale exercée par chaque rotor avant l'engagement du procédé.

La première consigne peut aussi être un ordre de commande de pas des deuxièmes pales de chaque hélice et ladite au moins une seconde consigne peut comporter deux secondes consignes correspondant respectivement à un ordre de commande de pas cyclique et à un ordre de commande de pas collectif des premières pales de chaque rotor.

Ces première et secondes consignes peuvent être déterminées, comme pour l'étape d'application automatique précédemment décrite, à partir de la première base de données, de la deuxième base de données et/ou en fonction de la première valeur de la première caractéristique, de la seconde valeur de la seconde caractéristique et des conditions de vol déterminées lors de l'étape de détermination des conditions de vol de l'hélicoptère hybride, en particulier des conditions atmosphériques.

Par ailleurs, un hélicoptère hybride peut comporter une seule hélice ou bien au moins deux hélices agencés de part et d'autre du fuselage de l'hélicoptère hybride. Lorsque l'hélicoptère hybride comporte au moins deux hélices, ces au moins deux hélices sont susceptibles d'assurer la fonction d'avancement de l'hélicoptère hybride ainsi que les fonctions anticouple et de contrôle en lacet. Dans ce cas, le pas des deuxièmes pales de chaque hélice peut être décomposé selon une composante de pas moyen et une composante de pas différentiel. Le pas des deuxièmes pales d'une première hélice peut alors être égal à la somme de la composante de pas moyen et de la composante de pas différentiel. De même, le pas des deuxièmes pales d'une deuxième hélice peut être égal à la soustraction de la composante de pas moyen par la composante de pas différentiel. En outre, la composante de pas moyen peut être égale à la demi-somme des pas des deux hélices alors que la composante de pas différentiel peut être égale à la demi-différence des pas des deux hélices.

En conséquence, lorsque l'hélicoptère hybride comporte au moins deux hélices, le pas des deuxièmes pales de chaque hélice évoqué précédemment est égal au pas moyen des deuxièmes pales de cette hélice. A contrario, lorsque l'hélicoptère hybride comporte une seule hélice, le pas des deuxièmes pales de cette unique hélice évoqué précédemment est égal au pas total des deuxièmes pales de cette hélice.

Selon un aspect, l'hélicoptère hybride peut comporter au moins un empennage, par exemple horizontal, muni d'au moins un tronçon mobile permettant de contrôler l'équilibre longitudinal de l'hélicoptère hybride et le procédé selon l'invention peut comporter une étape complémentaire de commande d'une orientation dudit au moins un tronçon mobile de sorte à contrôler l'incidence du fuselage. Un actionneur permet de déplacer chaque tronçon mobile. Un empennage peut être formé entièrement par un tronçon mobile et être de fait totalement orientable par l'actionneur.

Un tel empennage, par exemple sensiblement horizontal, permet de modifier l'incidence du fuselage et, de fait, d'incliner le fuselage ainsi qu'éventuellement les ailes et chaque hélice qui sont solidaires du fuselage et/ou des ailes. En conséquence, chaque hélice peut être orientée par rapport à la direction d'avancement de l'hélicoptère hybride, et de préférence parallèlement à cette direction d'avancement, afin d'une part que la poussée exercée par chaque hélice soit le plus parallèle possible à cette direction d'avancement de sorte à contribuer uniquement à l'avancement de l'hélicoptère hybride et d'autre part de minimiser les efforts sur le mât de chaque hélice.

De même, cette incidence du fuselage peut également permettre d'incliner le mât de chaque rotor de sorte également à minimiser les efforts subis par ce mât en orientant le fuselage sensiblement parallèlement au disque rotor.

De plus, afin que les ailes éventuelles exercent une force de portance suffisante pour assurer le vol stabilisée de l'hélicoptère hybride, des tronçons mobiles, par exemple de type volet, de chaque aile sont orientés de façon adéquate.

Une des deux conditions peut être privilégiée en fonction de l'incidence de chaque rotor ou bien un compromis entre ces deux conditions peut être privilégié par le calculateur ou bien par le pilote de l'hélicoptère hybride.

La présence d'un tel empennage permet de la sorte d'améliorer avantageusement le comportement et l'équilibre de l'hélicoptère hybride.

Selon un aspect, le procédé selon l'invention peut comporter une étape supplémentaire de réduction d'une vitesse de rotation dudit au moins un rotor, afin de réduire de nouveau les bruits générés par les premières pales de chaque rotor. En effet, le procédé permet d'orienter le sillage tourbillonnaire généré par chaque première pale de chaque rotor afin que ce sillage évite autant que possible les autres premières pales du rotor et les deuxièmes pales des hélices afin de limiter la génération de bruit. Avantageusement, la réduction de la vitesse de rotation de chaque rotor permet, d'une part, de limiter l'intensité de chaque sillage tourbillonnaire et, de fait, l'intensité des bruits éventuellement provoqués par chaque sillage tourbillonnaire et, d'autre part, de limiter l'apparition de bruits aérodynamiques propres aux premières pales de chaque rotor générés lors de leurs rotations.

La présente invention vise également un hélicoptère hybride comportant :
- un fuselage,
- au moins un rotor muni d'une pluralité de premières pales et assurant au moins partiellement la sustentation et/ou l'avancement de l'hélicoptère hybride,
- au moins une hélice munie d'une pluralité de deuxièmes pales et assurant au moins partiellement l'avancement de l'hélicoptère hybride,
- un dispositif de pilotage automatique,
- au moins un capteur déterminant des conditions de vol de l'hélicoptère hybride, et
- au moins un calculateur.

Le calculateur est configuré pour mettre en œuvre le procédé de réduction de bruit en vol pour un hélicoptère hybride précédemment décrit. Ledit au moins un capteur est destiné à la mesure ou à la détermination des conditions de vol de l'hélicoptère hybride.

L'hélicoptère hybride peut également comporter au moins deux ailes agencées de part et d'autre du fuselage et assurant au moins partiellement la sustentation de l'hélicoptère hybride et au moins un dispositif de visualisation.

L'invention et ses avantages apparaîtront avec plus de détails dans le cadre de la description qui suit avec des exemples donnés à titre illustratif en référence aux figures annexées qui représentent :
- la figure 1, un hélicoptère hybride,
- les figures 2 à 4, trois schémas représentant un hélicoptère hybride,
- la figure 5, un diagramme représentant une plage optimisée relative à une première caractéristique de chaque hélice, et
- la figure 6, un diagramme représentant une courbe du pas des premières pales d'une hélice.

Les éléments présents dans plusieurs figures distinctes sont affectés d'une seule et même référence.

Un hélicoptère hybride 10 comporte de façon générale un fuselage 11, au moins un rotor 12 muni d'une pluralité de premières pales 121, au moins une hélice 13 munie d'une pluralité de deuxièmes pales 131, une poutre de queue 16. Chaque rotor 12 assure au moins partiellement la sustentation et/ou l'avancement de l'hélicoptère hybride 10 et chaque hélice 13 assure au moins partiellement l'avancement de l'hélicoptère hybride 10.

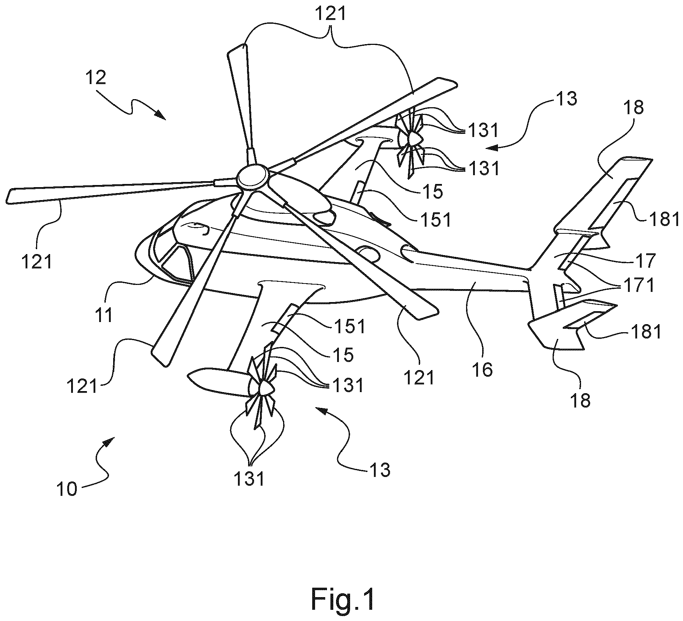

L'exemple d'hélicoptère hybride 10 représenté sur la figure 1 comporte plus précisément un fuselage 11, un rotor 12, deux hélices 13, une poutre de queue 16 ainsi que deux ailes 15 assurant au moins partiellement la sustentation de l'hélicoptère hybride 10 en vol d'avancement et trois empennages 17,18 portés par la poutre de queue 16, à savoir un empennage horizontal 17 et deux empennages verticaux 18. De plus, chaque aile 15 comporte un tronçon mobile 151 orientable afin de modifier la force de portance générée par chaque aile 15. De même, l'empennage horizontal 17 comporte deux tronçons mobiles 171 orientables et chaque empennage vertical 18 comporte un tronçon mobile 181 orientable afin de modifier la force aérodynamique générée respectivement par chacun de ces empennages 17,18.

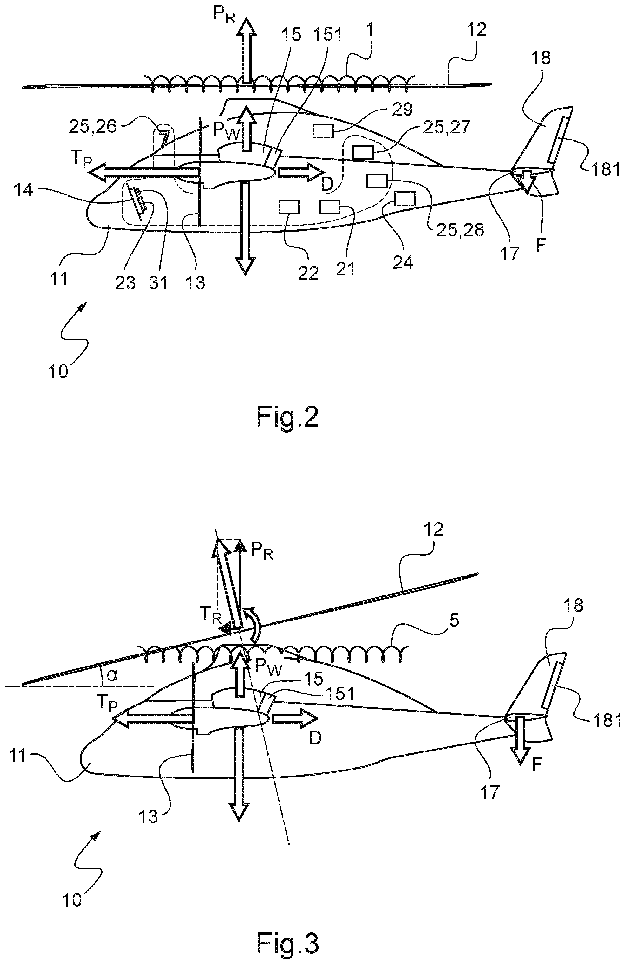

L'hélicoptère hybride 10 comporte également, selon la figure 2, un dispositif de pilotage automatique 21 de l'hélicoptère hybride 10, par exemple un pilote automatique, un calculateur 22, plusieurs capteurs 25 et un dispositif de visualisation 23. Le dispositif de visualisation 23 est par exemple agencé sur un tableau de bord 14 de l'hélicoptère hybride 10. Cependant, tout autre dispositif de visualisation peut être utilisé dans le cadre de l'invention tel qu'un dispositif tête haute par exemple.

Les capteurs 25 sont destinés à la mesure ou à la détermination de conditions de vol de l'hélicoptère hybride 10. Les capteurs 25 comportent par exemple un dispositif 26 muni d'un tube de Pitot permettant de mesurer la vitesse par rapport à l'air de l'hélicoptère hybride 10. Les capteurs 25 comportent par exemple une centrale inertielle 28 permettant de déterminer la pente aérodynamique de la trajectoire suivie par l'hélicoptère hybride 10. Les capteurs 25 comportent par exemple au moins un dispositif 27 dédié à des mesures des conditions atmosphériques, à savoir d'une température extérieure et d'une pression atmosphérique extérieure à l'hélicoptère hybride 10.

L'hélicoptère hybride 10 comporte par exemple également un récepteur GNSS 24 fournissant la position de l'hélicoptère hybride 10 dans un repère terrestre ainsi qu'une radiosonde ou un radioaltimètre 29 fournissant une hauteur mesurée sensiblement verticalement entre l'hélicoptère hybride 10 et le sol ou l'eau survolé.

L'hélicoptère hybride 10 représenté sur la figure 2 est en situation de vol de croisière en palier horizontal avec une pente aérodynamique nulle. Les hélices 13 fournissent la première poussée *T_{P}* nécessaire à l'avancement de l'hélicoptère hybride 10 alors que la force de portance nécessaire à sa sustentation est fournie conjointement par les ailes 15 qui fournissent une première portance *P_{W}* et le rotor 12 qui fournit une seconde portance *P_{R}*. Le rotor 12 a une incidence nulle et la force aérodynamique qu'il génère est entièrement destinée à la portance de l'hélicoptère hybride 10. L'empennage horizontale 17 exerce pour sa part une force aérodynamique F orienté vers le pas et permettant l'équilibre de l'hélicoptère hybride 10 de sorte que le fuselage 11 ait une incidence sensiblement nulle.

Dans cette configuration et en particulier en conséquence de l'incidence nulle du rotor 12 et d'un vol avec une pente aérodynamique nulle, le sillage tourbillonnaire 1 généré par chacune des premières pales 121 en rotation se propage sensiblement horizontalement comme représenté sur la figure 2 de sorte que les autres premières pales 121 de ce rotor 12 peuvent frapper chaque sillage tourbillonnaire 1 provoquant l'apparition de bruits pouvant être gênants pour la population éventuellement survolée.

L'hélicoptère hybride 10 représenté sur la figure 3 est dans la même situation de vol de croisière en palier horizontal avec une pente aérodynamique nulle que l'hélicoptère hybride 10 représenté sur la figure 2. Cependant, la répartition des forces aérodynamiques générées par les hélices 13, le rotor 12, les ailes 15 et l'empennage horizontal 17 est différente suite à l'application du procédé selon l'invention.

En effet, le rotor 12 a une incidence *α* non nulle. En conséquence, la force aérodynamique générée par le rotor 12 se décompose en une seconde portance *P_{R}* et une seconde poussée *T_{R}*. Cette seconde portance *P_{R}* s'ajoute à la première portance *P_{W}* générée par les ailes 12 pour assurer la sustentation de l'hélicoptère hybride 10. Pour que cette seconde portance *P_{R}* soit égale à celle représentée la figure 2, la force aérodynamique générée par le rotor 12 est augmentée par rapport à la figure 2, en fonction de l'incidence *α* du rotor 12. De même, la seconde poussée *T_{R}* générée par le rotor 12 s'ajoute dans ce cas à la première poussée *Tp* générée par chaque hélice 13 afin s'assurer l'avancement de l'hélicoptère hybride 10.

De plus, la force aérodynamique F exercée par l'empennage horizontale 17 est augmentée par rapport à la figure 2 afin de s'opposer au couple induit par l'incidence non nulle du rotor de sorte à maintenir l'équilibre de l'hélicoptère hybride 10 et de l'incidence sensiblement nulle du fuselage 11.

En conséquence, la force aérodynamique de traînée D, générée notamment par le fuselage 11, le rotor 12 et les empennages 17,18 peut être augmentée par rapport à la figure 2. Toutefois, La première poussée *T_{P}* dans cette configuration de la figure 3 peut être réduite par rapport à la figure 2 afin de réaliser le vol de croisière et l'équilibre de l'hélicoptère hybride 10.

Dans cette situation et en particulier en conséquence d'un vol avec une pente aérodynamique nulle et malgré l'incidence *α* non nulle du rotor 12, le sillage tourbillonnaire 5 généré par chacune des premières pales 121 en rotation se propage sensiblement horizontalement comme représenté sur la figure 3 sans entrer en contact avec les autres premières pales 121 de ce rotor 12, comme représenté sur la figure 3 et ne provoque donc avantageusement pas l'apparition de bruits pouvant être gênants pour la population au sol.

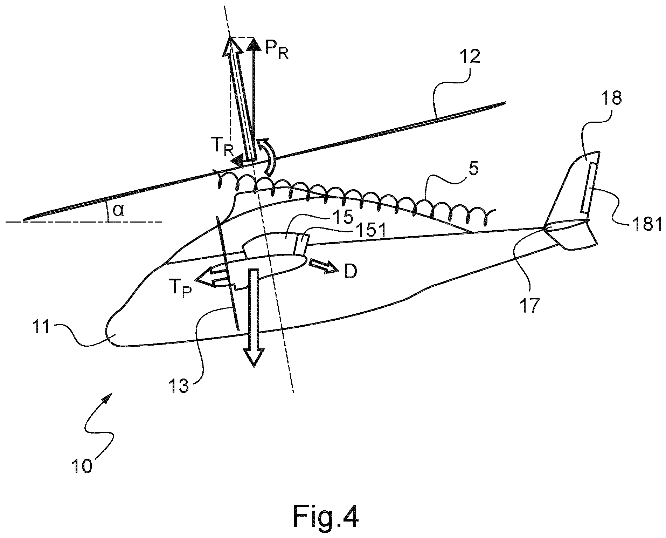

Cette configuration est obtenue par la mise en œuvre du procédé de réduction de bruit en vol d'un hélicoptère hybride 10 selon l'invention par l'intermédiaire du calculateur 22. Le calculateur 22 comporte une mémoire pouvant stocker des instructions permettant notamment d'exécuter ce procédé de réduction de bruit en vol. Le calculateur 22, formé par exemple par un processeur ou bien un système programmable ou tout autre dispositif approprié, permet l'exécution des étapes de ce procédé de réduction de bruit en vol. L'hélicoptère hybride 10 représenté sur la figure 4 est dans une phase de décollage avec une pente aérodynamique non nulle et une trajectoire ascendante. Le rotor 12 a une incidence non nulle de même que le fuselage 11. En conséquence, la force aérodynamique générée par le rotor 12 se décompose en une seconde portance *P_{R}* et une seconde poussée *TR.* La seconde poussée *T_{R}* générée par le rotor 12 peut dans ce cas s'ajouter à une première poussée *T_{P}* générée par chaque hélice 13 afin d'assurer l'avancement de l'hélicoptère hybride 10. Toutefois, l'avancement de l'hélicoptère hybride 10 peut être assuré uniquement par le rotor 12, la première poussée *T_{P}* générée par chaque hélice 13 étant alors nulle.

De plus, la vitesse d'avancement de l'hélicoptère hybride 10 est faible et en conséquence la première portance *P_{W}* générée par les ailes 15 et la force aérodynamique F exercée par l'empennage horizontal 17 sont sensiblement nulles. Dès lors, la seconde portance PR assure la sustentation de l'hélicoptère hybride 10 d'une part en s'opposant au poids apparent de l'hélicoptère hybride 10 et d'autre part en permettant l'ascension de l'hélicoptère hybride 10.

Enfin, en conséquence de la faible vitesse d'avancement de l'hélicoptère hybride 10, la force aérodynamique de traînée D, générée notamment par le fuselage 11, le rotor 12 et les empennages 17,18 est faible.

Dans cette situation et en particulier en conséquence de l'incidence non nulle du rotor 12 et de la trajectoire ascendante de l'hélicoptère hybride 10, le sillage tourbillonnaire 5 généré par chacune des premières pales 121 en rotation se propage vers l'arrière et vers le bas, en se dirigeant entre les premières pales 121 de chaque rotor 12 et les deuxièmes pales 131 de chaque hélice 13. En conséquence, le sillage tourbillonnaire 5 se propage avantageusement sans entrer en contact avec les autres premières pales 121 de ce rotor 12 et avec les secondes pales 131 de chaque hélice 13, et ne provoque donc avantageusement pas l'apparition de bruits pouvant être gênants pour la population au sol.

Cette configuration est obtenue également par la mise en œuvre du procédé de réduction de bruit en vol d'un hélicoptère hybride 10 selon l'invention par l'intermédiaire du calculateur 22.

Ce procédé de réduction du bruit peut être engagé manuellement par un pilote de l'hélicoptère hybride 10 par l'intermédiaire d'une manœuvre d'un dispositif d'engagement 31 transmettant un ordre au calculateur 22, cet ordre étant porté par un signal, par exemple analogique ou numérique et électrique ou optique. Ce procédé peut aussi être engagé automatiquement en fonction de la position de l'hélicoptère hybride 10 dans un repère terrestre, par exemple lorsqu'il survole une zone habitée, et/ou de la distance entre l'hélicoptère hybride 10 et le sol survolé.

Tout d'abord, une étape de détermination des conditions de vol de l'hélicoptère hybride 10 est réalisée par l'intermédiaire des capteurs 25. Au cours de cette étape de détermination des conditions de vol de l'hélicoptère hybride 10, la vitesse par rapport à l'air de l'hélicoptère hybride 10 et la pente aérodynamique de sa trajectoire sont notamment déterminées. La température extérieure à l'hélicoptère hybride 10 et la pression atmosphérique peuvent également être mesurées au cours de cette étape. De même, la masse courante de l'hélicoptère hybride 10 peut être déterminée en vol de façon connue, par exemple par l'intermédiaire d'un dispositif dédié ou bien par le calculateur 22.

Ensuite, une étape de détermination d'une première valeur d'une première caractéristique de chaque hélice 13 est réalisée à l'aide d'une première base de données et en fonction des conditions de vol.

La première base de données a été préalablement déterminée, par exemple lors d'une étape préliminaire d'établissement de la première base de données. Cette première base de données a été établie par exemple par des calculs et des simulations numériques en faisant intervenir un modèle de mécanique du vol définissant les équilibres de l'hélicoptère hybride 10, puis éventuellement validée par essais.

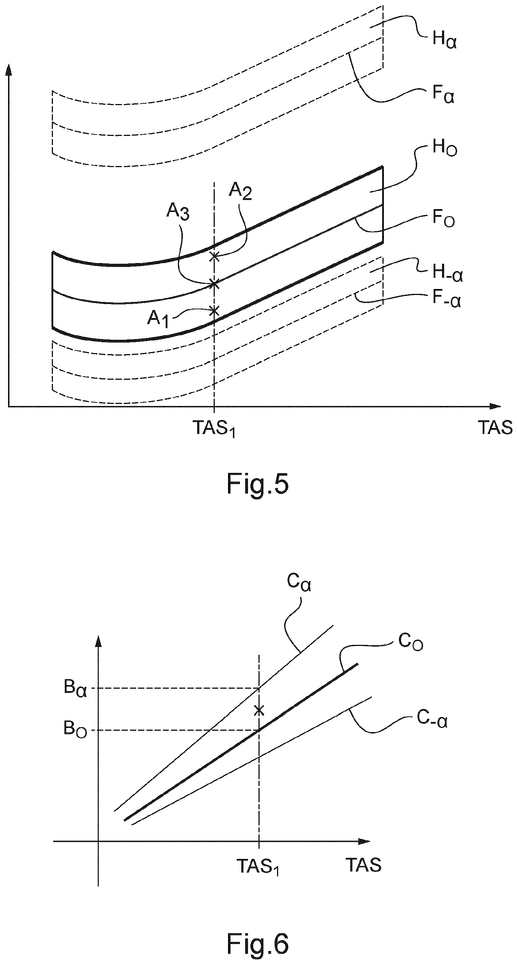

La première base de données peut comporter un réseau de plages optimisées ou bien un réseau de premières courbes optimisées correspondant à des premières valeurs de la première caractéristique permettant de limiter au minimum les interactions du sillage tourbillonnaire généré par le rotor 12. Le diagramme de la figure 5 représente une plage optimisée et une courbe optimisée dans un repère ayant pour abscisse la vitesse par rapport à l'air de l'hélicoptère hybride 10 et en ordonnée la première caractéristique de chaque hélice 13.

La première courbe optimisée associe une première valeur de la première caractéristique de chaque hélice à une vitesse par rapport à l'air de l'hélicoptère hybride 10 alors que la plage optimisée associe plusieurs premières valeurs de la première caractéristique à une vitesse par rapport à l'air de l'hélicoptère hybride 10.

La première courbe optimisée définit les couples de premières valeurs de la première caractéristique et de vitesses par rapport à l'air de l'hélicoptère hybride 10 optimisant la réduction de bruit selon un compromis prédéfini entre les interactions BVI et les interactions entre le sillage tourbillonnaire et les deuxièmes pales 131. La plage optimisée définit quant à elle plusieurs premières valeurs de la première caractéristique pour une vitesse par rapport à l'air de l'hélicoptère hybride 10. Ces premières valeurs de la première caractéristique couvrent un intervalle entre une limite supérieure de la plage optimisée correspondant à des premières valeurs maximales au-dessus desquelles se produit une interaction *BVI* et une limite inférieure de la plage optimisée correspondant à des premières valeurs minimales en-dessous desquelles se produit une interaction entre les deuxièmes pales et le sillage tourbillonnaire.

En outre, chaque plage optimisée et chaque courbe optimisée sont définies pour une pente aérodynamique donnée de la trajectoire de l'hélicoptère hybride 10. Pour une pente aérodynamique différente, une autre plage optimisée et une courbe optimisée sont à prendre en compte pour déterminer la première valeur de la première caractéristique.

Par exemple, la courbe optimisée *F₀* et la plage optimisée *H₀* représentées sur la figure 5 sont définies pour une pente aérodynamique donnée, par exemple nulle. Dès lors, pour une pente aérodynamique différente de la pente aérodynamique donnée, la courbe optimisée et la plage optimisée sont obtenues respectivement par translation verticale, parallèlement à l'axe des ordonnées, de la courbe optimisée *F₀* et de la plage optimisée *H₀.* Par exemple, cette courbe optimisée *F₀* et cette plage optimisée *H₀* peuvent être décalées vers le haut, à savoir vers des premières valeurs supérieures de la première caractéristique, pour former une courbe optimisée *F_{α}* et une plage optimisée *H_{α}* associées à une pente aérodynamique *α* positive correspondant à un vol en montée ou bien vers le bas, à savoir vers des premières valeurs inférieures de la première caractéristique, pour former une courbe optimisée *F_{-α}* et une plage optimisée *H_{-α}* associées à une pente aérodynamique négative -a correspondant à un vol en en descente.

De plus, une courbe optimisée et une plage optimisée peuvent être corrigées en fonction de la masse courante de l'hélicoptère hybride 10 ou bien des conditions atmosphériques et des écarts avec les valeurs de la masse de l'hélicoptère hybride 10 ou bien des conditions atmosphériques présentes lors de l'établissement de la première base de données.

La première caractéristique d'une hélice 13 peut être par exemple un ordre de commande de pas de ses deuxièmes pales 131 ou bien un ordre de commande d'une première poussée exercée par cette hélice 13 et contribuant partiellement à l'avancement de l'hélicoptère hybride 10.

L'hélicoptère hybride 10 représenté sur la figure 1 comporte deux hélices 13 susceptibles d'assurer d'une part la fonction d'avancement de l'hélicoptère hybride 10 et d'autre part les fonctions anticouple et de contrôle en lacet de l'hélicoptère hybride 10. Le pas des deuxièmes pales 131 de chaque hélice 13 peut alors être décomposé selon une composante de pas moyen relative à l'avancement de l'hélicoptère hybride 10 et une composante de pas différentiel relative aux fonctions anticouple et de contrôle en lacet de l'hélicoptère hybride 10.

Dans ce cas, le pas des deuxièmes pales 131 évoqué par la suite est égal à ce pas moyen.

Au cours de cette étape de détermination d'une première valeur de la première caractéristique de chaque hélice 13, la première valeur de la première caractéristique de chaque hélice 13 est donc déterminée selon la première base de données notamment en fonction de la vitesse par rapport à l'air de l'hélicoptère hybride 10 et de la pente aérodynamique selon la première bas de données. Cette première valeur de la première caractéristique est donc déterminée afin de limiter, voire d'éviter des interactions du sillage tourbillonnaire avec les premières pales 121 et/ou les deuxièmes pales 131.

Par exemple, si la première base de données comporte des plages optimisées et si on souhaite que le sillage tourbillonnaire soit éloigné au maximum des premières pales 121, une première valeur A1 de la première caractéristique est déterminée au plus proche de la limite inférieure de la plage optimisée pour la vitesse courante par rapport à l'air TAS 1 de l'hélicoptère hybride 10. Au contraire, si on souhaite que le sillage tourbillonnaire soit éloigné au maximum des deuxièmes pales 131, la première valeur A2 de la première caractéristique est déterminée au plus proche de la limite supérieure de la plage optimisée. Afin que le sillage tourbillonnaire soit équidistant des premières pales 121 et des secondes pales 131, afin de limiter au maximum les interactions bruyantes du sillage tourbillonnaire généré par chacune des premières pales 121 en rotation avec les autres premières pales 121 et avec les deuxièmes pales 131 de chaque hélices 13, la première valeur A3 de la première caractéristique est choisie sensiblement au milieu de la plage optimisée. La valeur A3 se trouve aussi sur une courbe optimisée *F₀* que pourrait comporter la première base de données.

Ensuite, une étape de détermination d'une seconde valeur d'une seconde caractéristique du rotor 12 est réalisée à l'aide d'une deuxième base de données. La seconde valeur de la seconde caractéristique est choisie en fonction de la première valeur de la première caractéristique de chaque hélice 13 précédemment déterminée et de la pente aérodynamique. En effet, la deuxième base de données associe, suite aux simulations effectuées éventuellement lors de l'étape préliminaire, à une première valeur de la première caractéristique une seule seconde valeur de la seconde caractéristique du rotor 12 pour une pente aérodynamique courante de la trajectoire de l'hélicoptère hybride 10. Ce couple de la première valeur de la première caractéristique et de la seconde valeur de la seconde caractéristique permet avantageusement de limiter, voire d'éviter une génération de bruit due aux interactions du sillage tourbillonnaire provoqué par chaque première pale 121 en rotation du rotor 12 avec les autres pales 121,131 du rotor 12 et de chaque hélice 13.

La seconde caractéristique du rotor 12 peut être par exemple une incidence du disque rotor ou bien un ordre de commande d'une seconde poussée exercée par le rotor 12 et contribuant partiellement à l'avancement de l'hélicoptère hybride 10.

La deuxième base de données peut comporter un réseau de secondes courbes, un algorithme de simulation numérique ou encore une ou plusieurs équations déterminées en simulation puis recalées lors d'essais en vol. Ces secondes courbes mettent en relation la première caractéristique de chaque hélice 13, la seconde caractéristique du rotor 12 et la pente aérodynamique de la trajectoire de l'hélicoptère hybride 10 ainsi qu'éventuellement la vitesse par rapport à l'air de l'hélicoptère hybride 10.

Par exemple, lorsque la seconde caractéristique est l'incidence du disque rotor, la deuxième base de données peut comporter un réseau de secondes courbes, chaque seconde courbe correspondant à une valeur distincte d'incidence du disque rotor et fournit le pas des premières pales 131 d'une hélice 13 en fonction de la vitesse d'avancement par rapport à l'air de l'hélicoptère hybride 10. De tels réseaux de secondes courbes existent pour les phases de vol stabilisées en palier, en montée et en descente. Une seconde courbe *C₀* est représentée sur la figure 6 pour un vol en palier à incidence nulle du disque rotor. Si la première valeur *B₀* de la première caractéristique déterminée précédemment pour la vitesse d'avancement courante par rapport à l'air de l'hélicoptère hybride 10 se trouve sur cette seconde courbe, alors la seconde valeur de la seconde caractéristique, à savoir l'incidence du disque rotor, est égale à zéro. Par contre, si la première valeur de la première caractéristique n'est pas sur cette seconde courbe, alors la seconde valeur de la seconde caractéristique n'est pas nulle.

Lors des simulations et des essais en vol, d'autres secondes courbes *C_{α}, C_{-α}* ont été construites correspondant aux incidences non nulles du disque rotor. Dès lors, si la première valeur *B_{α}* de la première caractéristique est sur une seconde courbe *C_{α},* alors la seconde valeur de la seconde caractéristique est égale à l'incidence α correspondant à la seconde courbe *C_{α}* sur laquelle se trouve la première valeur. Si une première valeur de la première caractéristique n'est sur aucune seconde courbe *C_{α}* et se trouve entre deux secondes courbes, alors la seconde valeur de la seconde caractéristique est déterminée par interpolation.

Ces différentes secondes courbes fournissant le pas des premières pales 131 d'une hélice 13 en fonction de la vitesse d'avancement par rapport à l'air TAS de l'hélicoptère hybride 10, pour les phases de vol stabilisées en palier, en montée et en descente et avec différentes valeurs d'incidences du rotor 12 sont stockées dans la deuxième base de données.

Enfin, une étape de réalisation d'une phase de vol stabilisée de l'hélicoptère hybride 10 est réalisée en appliquant la première valeur de la première caractéristique aux deux hélices 13 et la seconde valeur de la seconde caractéristique déterminée au rotor 12.

Cette étape de réalisation de la phase de vol stabilisée peut être automatique et comporte alors une sous-étape de commande automatique des deux hélices 13 selon la première valeur de la première caractéristique et du rotor 12 selon la seconde valeur de la seconde caractéristique par l'intermédiaire du dispositif de pilotage automatique 21 de l'hélicoptère hybride 10.

Cette sous-étape d'application automatique peut utiliser comme première consigne pour chaque hélice 13 la première valeur de la première caractéristique et comme seconde consigne pour le rotor 12 la seconde valeur de la seconde caractéristique.

Cette sous-étape d'application automatique peut également utiliser comme première consigne pour chaque hélice 13 une première consigne de commande de pas des deuxièmes pales 131. Cette sous-étape d'application automatique peut également utiliser comme secondes consignes pour le rotor 12 une seconde consigne de commande de pas cyclique et une seconde consigne de commande de pas collectif des premières pales.

Cette étape d'application automatique comporte alors les sous-étapes suivantes :
- une sous-étape de détermination d'une première consigne de commande de pas des deuxièmes pales 131 de chaque hélice 13 en fonction de la première valeur de la première caractéristique,
- une sous-étape de détermination de secondes consignes de commande de pas cyclique et de commande de pas collectif des premières pales 121 du rotor 12 en fonction de la seconde valeur de la seconde caractéristique, et
- une sous-étape de commande automatique des deux hélices 13 selon la première consigne de pas des deuxièmes pales 131 et du rotor 12 selon les secondes consignes des pas cyclique et de pas collectif des premières pales 121 par l'intermédiaire du dispositif de pilotage automatique 21.

La première consigne peut être associée à la première valeur de la première caractéristique dans la première base de données ou bien être déterminée par l'intermédiaire du calculateur 22, en fonction de la première valeur de la première caractéristique, voire des conditions de vol de l'hélicoptère hybride 10, en particulier des conditions atmosphériques, par exemple par le biais d'un algorithme de pilotage.

Les secondes consignes peuvent être déterminées par l'intermédiaire du calculateur 22, en fonction de la seconde valeur de la seconde caractéristique et des conditions de vol déterminées lors de l'étape de détermination des conditions de vol de l'hélicoptère hybride 10, en particulier des conditions atmosphériques, et éventuellement de la deuxième base de données, par exemple par le biais d'un algorithme de pilotage.

La première consigne peut par exemple être égale à un ordre de commande de pas des deuxièmes pales 131 de chaque hélice 13 et ladite au moins une seconde consigne peut comporter deux secondes consignes égales respectivement à un ordre de commande de pas cyclique et à un ordre de commande de pas collectif des premières pales 121 du rotor 12.

L'étape de réalisation de la phase de vol stabilisée peut aussi être manuelle et comporte à ce titre les sous-étapes suivantes :
- une sous-étape de détermination d'une première consigne à appliquer aux deux hélices 13 en fonction de la première valeur de la première caractéristique,
- une sous-étape de détermination d'au moins une seconde consigne à appliquer audit au moins un rotor principal (12) en fonction de ladite seconde valeur de ladite seconde caractéristique, et
- une sous-étape d'affichage de ladite première consigne et de ladite au moins une seconde consigne sur le dispositif de visualisation 23.

De la sorte, le pilote visualise sur le dispositif de visualisation 23 les consignes à appliquer respectivement aux deux hélices 13 et au rotor 12. Le pilote peut ensuite piloter manuellement l'hélicoptère hybride 10, durant une sous-étape de pilotage manuel de l'hélicoptère hybride 10, en appliquant ces consignes afin de limiter les bruits générés par le sillage tourbillonnaire généré par chaque première pale 121 du rotor 12.

Comme dans le cas d'une réalisation automatique de la phase de vol stabilisée, la première consigne peut être égale à la première valeur de la première caractéristique et ladite au moins une seconde consigne peut être égale à la seconde valeur de la seconde caractéristique.

La première consigne peut aussi être égale à un ordre de commande de pas des deuxièmes pales 131 de chaque hélice 13 et ladite au moins une seconde consigne peut comporter deux secondes consignes égales respectivement à un ordre de commande de pas cyclique et à un ordre de commande de pas collectif des premières pales 121 du rotor 12.

Ces première et secondes consignes peuvent être déterminées, en appliquant par exemple les mêmes sous-étapes que pour l'étape d'application automatique précédemment décrite.

Ces première et secondes consignes peuvent alors être déterminées, comme précédemment, à partir de la première base de données, de la deuxième base de données et/ou en fonction de la première valeur de la première caractéristique, de la seconde valeur de la seconde caractéristique et des conditions de vol.

En outre, le procédé peut comporter une étape supplémentaire d'inhibition du procédé lorsque la phase de vol de l'hélicoptère hybride 10 n'est plus stabilisée. L'hélicoptère hybride 10 n'est plus dans une phase de vol stabilisée par exemple lors d'une manœuvre. Une phase de vol non stabilisée est établie par le calculateur 22 dès qu'une des conditions suivantes est réalisée :
- la pente aérodynamique de l'hélicoptère hybride 10 n'est pas constante,
- un facteur de charge de l'hélicoptère hybride 10 n'est pas constant,
- la vitesse par rapport à l'air de l'hélicoptère hybride 10 n'est pas constante,
- un angle de tangage ou un angle de roulis de l'hélicoptère hybride 10 n'est pas constant,
- une vitesse verticale de l'hélicoptère hybride 10 n'est pas constante, ou
- une action entreprise par un pilote sur une commande de vol de l'hélicoptère hybride 10 est détectée.

L'hélicoptère hybride 10 comportant un empennage horizontal 17 muni de tronçons mobiles 171 orientable, le procédé peut comporter une étape complémentaire de commande d'une orientation de l'empennage horizontal 17 de sorte à contrôler une incidence du fuselage 11. En conséquence, le fuselage 11 peut être incliné sans que soit modifiée l'incidence du disque rotor de sorte à orienter par exemple la poussée des hélices 13 parallèlement à la direction d'avancement de l'hélicoptère hybride 10 afin de minimiser les efforts sur le mât de chaque hélice 13. Enfin, le procédé peut comporter une étape supplémentaire de réduction d'une vitesse de rotation NR du rotor 12. Cette réduction de la vitesse de rotation NR du rotor 12 peut également contribuer à réduire les bruits générés par les premières pales 121 du rotor 12, en réduisant notamment l'intensité de chaque sillage tourbillonnaire généré par chaque première pale 121. Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est défini par les revendications annexées.

## Revendications

1. Procédé de réduction de bruit en vol pour un hélicoptère hybride (10), ledit hélicoptère hybride (10) comportant :
- au moins un rotor principal (12) muni d'une pluralité de premières pales (121) et assurant au moins partiellement la sustentation et/ou l'avancement dudit hélicoptère hybride (10),
- au moins une hélice (13) munie d'une pluralité de deuxièmes pales (131) et assurant au moins partiellement l'avancement dudit hélicoptère hybride (10),
- un dispositif de pilotage automatique (21), et
- au moins un calculateur (22),
**caractérisé en ce que** ledit procédé comporte les étapes suivantes :
- détermination de conditions de vol dudit hélicoptère hybride (10) avec au moins un capteur (25) dudit hélicoptère hybride (10), lesdites conditions de vol comportant une vitesse par rapport à l'air dudit hélicoptère hybride (10) et une pente aérodynamique d'une trajectoire suivie par ledit hélicoptère hybride (10),
- détermination d'une première valeur d'une première caractéristique de ladite au moins une hélice (13) selon une première base de données en fonction desdites conditions de vol,
- détermination d'une seconde valeur d'une seconde caractéristique dudit au moins un rotor principal (12) selon une deuxième base de données en fonction de ladite première valeur de ladite première caractéristique (13) de sorte à limiter une génération de bruit due à un sillage tourbillonnaire provoqué par chaque première pale (121) en rotation dudit au moins un rotor principal (12), et
- réalisation d'une phase de vol stabilisée dudit hélicoptère hybride (10) en appliquant ladite première valeur de ladite première caractéristique à ladite au moins une hélice (13) et ladite seconde valeur de ladite seconde caractéristique déterminée audit au moins un rotor principal (12).

2. Procédé selon la revendication 1,
**caractérisé en ce que** ledit procédé de réduction du bruit est engagé :
- soit en manœuvrant un dispositif d'engagement (31), ledit dispositif d'engagement (31) transmettant un signal audit calculateur (22),
- soit automatiquement en fonction de la position dudit hélicoptère hybride (10) dans un repère terrestre et/ou de la distance entre ledit hélicoptère hybride (10) et le sol survolé.

3. Procédé selon l'une quelconque des revendications 1 à 2, **caractérisé en ce que** ladite étape de réalisation de ladite phase de vol stabilisée comporte la sous-étape suivante :
- commande automatique de ladite au moins une hélice (13) selon ladite première valeur de ladite première caractéristique et dudit au moins un rotor principal (12) selon ladite seconde valeur de ladite seconde caractéristique par l'intermédiaire dudit dispositif de pilotage automatique (21) dudit hélicoptère hybride (10).

4. Procédé selon la revendication 3,
**caractérisé en ce que** ladite étape de commande automatique comporte les sous-étapes suivantes :
- détermination d'une première consigne de commande de pas desdites deuxièmes pales (131) de ladite au moins une hélice (13) en fonction de ladite première valeur de ladite première caractéristique,
- détermination de secondes consignes de commande de pas cyclique et de commande de pas collectif desdites premières pales (121) dudit au moins un rotor principal (12) en fonction de ladite seconde valeur de ladite seconde caractéristique, et
- commande automatique de ladite au moins une hélice (13) selon ladite première consigne de commande de pas desdites deuxièmes pales (131) et dudit au moins un rotor principal (12) selon lesdites secondes consignes de commande de pas cyclique et de commande de pas collectif desdites premières pales (121) par l'intermédiaire dudit dispositif de pilotage automatique (21).

5. Procédé selon l'une quelconque des revendications 1 à 2, **caractérisé en ce que** ladite étape de réalisation de ladite phase de vol stabilisée comporte les sous-étapes suivantes :
- détermination d'une première consigne à appliquer à ladite au moins une hélice (13) en fonction de ladite première valeur de ladite première caractéristique,
- détermination d'au moins une seconde consigne à appliquer audit au moins un rotor principal (12) en fonction de ladite seconde valeur de ladite seconde caractéristique, et
- affichage de ladite première consigne et de ladite au moins une seconde consigne sur un dispositif de visualisation (23) dudit hélicoptère hybride (10).

6. Procédé selon la revendication 5,
**caractérisé en ce que** ladite première consigne est égale à ladite première valeur de la première caractéristique et ladite au moins une seconde consigne est égale à ladite seconde valeur de la seconde caractéristique.

7. Procédé selon la revendication 5,
**caractérisé en ce que** ladite première consigne comporte un ordre de commande de pas desdites deuxièmes pales (131) de ladite au moins une hélice (13) et ladite au moins une seconde consigne comporte un ordre de commande de pas cyclique et un ordre de commande de pas collectif desdites premières pales (121) dudit au moins un rotor principal (12).

8. Procédé selon l'une quelconque des revendications 1 à 7, **caractérisé en ce que** ladite phase de vol stabilisée comporte un vol en palier horizontal à pente nulle, un vol en montée avec une pente aérodynamique non nulle positive ou un vol en descente avec une pente aérodynamique non nulle négative.

9. Procédé selon l'une quelconque des revendications 1 à 8, **caractérisé en ce que** lesdites conditions de vol comportent aussi une masse courante dudit hélicoptère hybride (10), une température extérieure audit hélicoptère hybride (10) et/ou une pression atmosphérique extérieure.

10. Procédé selon l'une quelconque des revendications 1 à 9, **caractérisé en ce que** ledit procédé comporte une étape préliminaire d'établissement de bases de données, lesdites bases de données comportant d'une part ladite première base de données permettant de déterminer lesdites premières valeurs de ladite première caractéristique de ladite au moins une hélice d'avancement (13) en fonction desdites valeurs de ladite vitesse par rapport à l'air dudit hélicoptère hybride (10) et de ladite pente aérodynamique et d'autre part ladite deuxième base de données permettant de déterminer lesdites secondes valeurs de ladite seconde caractéristique en fonction desdites premières valeurs de ladite première caractéristique.

11. Procédé selon la revendication 10,
**caractérisé en ce que** ladite première base de données comporte :
- soit un réseau de premières courbes optimisées mettant en relation ladite première caractéristique et ladite vitesse par rapport à l'air dudit hélicoptère hybride (10), chaque première courbe optimisée correspondant à ladite pente aérodynamique,
- soit un réseau de plages optimisées, chaque plage optimisée mettant en relation ladite première caractéristique et ladite vitesse par rapport à l'air dudit hélicoptère hybride (10), chaque plage optimisée correspondant à ladite pente aérodynamique,
- soit un algorithme de simulation numérique ou une ou plusieurs équations mettant en relation ladite première caractéristique, ladite vitesse par rapport à l'air dudit hélicoptère hybride (10) et ladite pente aérodynamique,
et ladite deuxième base de données comporte :
- soit un réseau de secondes courbes, chaque seconde courbe mettant en relation ladite première caractéristique et ladite seconde caractéristique, chaque seconde courbe correspondant à ladite pente aérodynamique,
- soit un algorithme de simulation numérique ou une ou plusieurs équations mettant en relation notamment ladite première caractéristique, ladite seconde caractéristique et ladite pente aérodynamique ainsi qu'éventuellement ladite vitesse par rapport à l'air dudit hélicoptère hybride (10).

12. Procédé selon l'une quelconque des revendications 1 à 11, **caractérisé en ce que** ladite première caractéristique de ladite au moins une hélice (13) comporte un ordre de commande de pas desdites deuxièmes pales (131) de ladite au moins une hélice (13) ou bien un ordre de commande d'une première poussée exercée par ladite au moins une hélice (13) et contribuant partiellement à l'avancement dudit hélicoptère hybride (10).

13. Procédé selon l'une quelconque des revendications 1 à 12, **caractérisé en ce que** ladite seconde caractéristique dudit au moins un rotor principal (12) comporte une incidence du disque rotor dudit au moins un rotor principal (12) ou bien un ordre de commande d'une seconde poussée exercée par ledit au moins un rotor principal (12).

14. Procédé selon l'une quelconque des revendications 1 à 13, **caractérisé en ce que** ledit procédé comporte une étape supplémentaire d'inhibition dudit procédé lorsque ladite phase de vol dudit hélicoptère hybride (10) n'est pas une dite phase de vol stabilisée.

15. Procédé selon la revendication 14,
**caractérisé en ce qu'**une phase de vol non stabilisée est établi dès qu'une des conditions suivantes est réalisée :
- ladite pente aérodynamique dudit hélicoptère hybride (10) n'est pas constante,
- un facteur de charge dudit hélicoptère hybride (10) n'est pas constant,
- ladite vitesse par rapport à l'air dudit hélicoptère hybride (10) n'est pas constante,
- un angle de tangage ou un angle de roulis dudit hélicoptère hybride (10) n'est pas constant,
- une vitesse verticale dudit hélicoptère hybride (10) n'est pas constante, ou
- une action entreprise par un pilote sur une commande de vol dudit hélicoptère hybride (10) est détectée.

16. Procédé selon l'une quelconque des revendications 1 à 15, **caractérisé en ce que** ledit hélicoptère hybride (10) comportant au moins un empennage (17) muni d'au moins un tronçon mobile (171) permettant de contrôler l'équilibre longitudinal dudit hélicoptère hybride (10), ledit procédé comporte une étape complémentaire de commande d'une orientation dudit au moins un tronçon mobile (171).

17. Procédé selon l'une quelconque des revendications 1 à 16, **caractérisé en ce que** ledit procédé comporte une étape supplémentaire de réduction d'une vitesse de rotation NR dudit au moins un rotor principal (12).

18. Hélicoptère hybride (10) comportant :
- un fuselage (11),
- au moins un rotor principal (12) muni d'une pluralité de premières pales (121) et assurant au moins partiellement la sustentation et/ou l'avancement dudit hélicoptère hybride (10),
- au moins une hélice (13) munie d'une pluralité de deuxièmes pales (131) et assurant au moins partiellement l'avancement dudit hélicoptère hybride (10),
- un dispositif de pilotage automatique (21),
- au moins un capteur (25) déterminant des conditions de vol dudit hélicoptère hybride (10), et
- au moins un calculateur (22),
**caractérisé en ce que** ledit calculateur (22) est configuré pour mettre en œuvre les étapes du procédé selon l'une quelconque des revendications 1 à 17.

## Patentansprüche

1. Verfahren zur Fluglärmreduzierung für einen Hybridhubschrauber (10), wobei der Hybridhubschrauber (10) umfasst:
- mindestens einen Hauptrotor (12) mit einer Mehrzahl von ersten Blättern (121), der zumindest teilweise den Auftrieb und/oder den Vortrieb des Hybridhubschraubers (10) gewährleistet,
- mindestens einen Propeller (13) mit einer Mehrzahl von zweiten Blättern (131), der zumindest teilweise den Vortrieb des Hybridhubschraubers (10) gewährleistet,
- eine Autopilotvorrichtung (21), und
- mindestens einen Rechner (22),
**dadurch gekennzeichnet, dass** das Verfahren die folgenden Schritte umfasst:
- Bestimmen von Flugbedingungen des Hybridhubschraubers (10) mit mindestens einem Sensor (25) des Hybridhubschraubers (10), wobei die Flugbedingungen eine Geschwindigkeit relativ zur Luft des Hybridhubschraubers (10) und eine aerodynamische Neigung einer von dem Hybridhubschrauber (10) verfolgten Flugbahn umfassen,
- Bestimmen eines ersten Werts eines ersten Merkmals des mindestens einen Propellers (13) gemäß einer ersten Datenbank in Abhängigkeit von den Flugbedingungen,
- Bestimmen eines zweiten Wertes eines zweiten Merkmals des mindestens einen Hauptrotors (12) gemäß einer zweiten Datenbank in Abhängigkeit von dem ersten Wert des ersten Merkmals (13), um so eine Lärmerzeugung aufgrund einer durch jedes rotierende erste Blatt (121) des mindestens einen Hauptrotors (12) verursachten Wirbelschleppe zu begrenzen, und
- Durchführen einer stabilisierten Flugphase des Hybridhubschraubers (10) durch Anwenden des ersten Wertes des ersten Merkmals auf den mindestens einen Propeller (13) und des bestimmten zweiten Wertes des zweiten Merkmals auf den mindestens einen Hauptrotor (12).

2. Verfahren nach Anspruch 1,
**dadurch gekennzeichnet, dass** das Verfahren zur Lärmreduzierung ausgelöst wird:
- entweder durch Betätigen einer Eingriffsvorrichtung (31), wobei die Eingriffsvorrichtung (31) ein Signal an den Rechner (22) sendet,
- oder automatisch in Abhängigkeit von der Position des Hybridhubschraubers (10) in einem Erdkoordinatensystem und/oder dem Abstand zwischen dem Hybridhubschrauber (10) und dem überflogenen Boden.

3. Verfahren nach einem der Ansprüche 1 bis 2,
**dadurch gekennzeichnet, dass** der Schritt des Durchführens der stabilisierten Flugphase den folgenden Unterschritt umfasst:
- Automatisches Steuern des mindestens einen Propellers (13) gemäß dem ersten Wert des ersten Merkmals und des mindestens einen Hauptrotors (12) gemäß dem zweiten Wert des zweiten Merkmals über die Autopilotvorrichtung (21) des Hybridhubschraubers (10).

4. Verfahren nach Anspruch 3,
**dadurch gekennzeichnet, dass** der Schritt des automatischen Steuerns die folgenden Teilschritte umfasst:
- Bestimmen eines ersten Sollwerts zum Steuern der Steigung der zweiten Blätter (131) des mindestens einen Propellers (13) in Abhängigkeit von dem ersten Wert des ersten Merkmals,
- Bestimmen zweiter Sollwerte zum Steuern de Steigung zyklischen Steigung und zum Steuern der kollektiven Steigung der ersten Blätter (121) des mindestens einen Hauptrotors (12) als Funktion des zweiten Wertes des zweiten Merkmals, und
- Automatisches Steuern des mindestens einen Propellers (13) gemäß dem ersten Sollwert zum Steuern der Steigung der zweiten Blätter (131) und des mindestens einen Hauptrotors (12) gemäß den zweiten Sollwerten zum Steuern der zyklischen Steigung und zum Steuern der kollektiven Steigung der ersten Blätter (121) über die Autopilotvorrichtung (21).

5. Verfahren nach einem der Ansprüche 1 bis 2,
**dadurch gekennzeichnet, dass** der Schritt des Durchführens der stabilisierten Flugphase die folgenden Teilschritte umfasst:
- Bestimmen eines auf den mindestens einen Propeller (13) anzuwendenden ersten Sollwerts in Abhängigkeit von dem ersten Wert des ersten Merkmals,
- Bestimmen mindestens eines auf den mindestens einen Hauptrotor (12) anzuwendenden zweiten Sollwerts in Abhängigkeit von dem zweiten Wert des zweiten Merkmals, und
- Anzeigen des ersten Sollwerts und des mindestens einen zweiten Sollwerts auf einem Anzeigegerät (23) des Hybridhubschraubers (10).

6. Verfahren nach Anspruch 5,
**dadurch gekennzeichnet, dass** der erste Sollwert gleich dem ersten Wert des ersten Merkmals ist und der mindestens eine zweite Sollwert gleich dem zweiten Wert des zweiten Merkmals ist.

7. Verfahren nach Anspruch 5,
**dadurch gekennzeichnet, dass** der erste Sollwert einen Befehl zum Steuern der Steigung der zweiten Blätter (131) des mindestens einen Propellers (13) umfasst und der mindestens eine zweite Sollwert einen Befehl zum Steuern der zyklischen Steigung und einen Befehl zum Steuern der kollektiven Steigung der ersten Blätter (121) des mindestens einen Hauptrotors (12) umfasst.

8. Verfahren nach einem der Ansprüche 1 bis 7,
**dadurch gekennzeichnet, dass** die stabilisierte Flugphase einen Horizontalschwebeflug mit Nullsteigung, einen Steigflug mit positiver, nichtverschwindender aerodynamischer Neigung oder einen Sinkflug mit negativer, nichtverschwindender aerodynamischer Neigung umfasst.

9. Verfahren nach einem der Ansprüche 1 bis 8,
**dadurch gekennzeichnet, dass** die Flugbedingungen auch eine aktuelle Masse des Hybridhubschraubers (10), eine Temperatur außerhalb des Hybridhubschraubers (10) und/oder einen äußeren Luftdruck umfassen.

10. Verfahren nach einem der Ansprüche 1 bis 9,
**dadurch gekennzeichnet, dass** das Verfahren einen vorbereitenden Schritt zum Erstellen von Datenbanken umfasst, wobei die Datenbanken einerseits die erste Datenbank zum Bestimmen der ersten Werte des ersten Merkmals des mindestens einen Vortriebspropellers (13) in Abhängigkeit von den Werten der Geschwindigkeit des Hybridhubschraubers (10) relativ zur Luft und der aerodynamischen Neigung und andererseits die zweite Datenbank zum Bestimmen der zweiten Werte des zweiten Merkmals in Abhängigkeit von den ersten Werten des ersten Merkmals umfassen.

11. Verfahren nach Anspruch 10,
**dadurch gekennzeichnet, dass** die erste Datenbank umfasst:
- entweder ein Netzwerk von ersten optimierten Kurven, die das erste Merkmal und die Geschwindigkeit relativ zur Luft des Hybridhubschraubers (10) in Beziehung setzen, wobei jede erste optimierte Kurve der aerodynamischen Neigung entspricht,
- oder ein Netzwerk von optimierten Bereichen, wobei jeder optimierte Bereich das erste Merkmal und die Geschwindigkeit relativ zur Luft des Hybridhubschraubers (10) in Beziehung setzt, wobei jeder optimierte Bereich der aerodynamischen Neigung entspricht,
- oder einen numerischen Simulationsalgorithmus oder eine oder mehrere Gleichungen, die das erste Merkmal, die Geschwindigkeit relativ zur Luft des Hybridhubschraubers (10) und die aerodynamische Neigung in Beziehung setzen,
und die zweite Datenbank umfasst:
- entweder ein Netzwerk von zweiten Kurven, wobei jede zweite Kurve das erste Merkmal und das zweite Merkmal in Beziehung setzt, wobei jede zweite Kurve der aerodynamischen Neigung entspricht,
- oder einen numerischen Simulationsalgorithmus oder eine oder mehrere Gleichungen, die insbesondere das erste Merkmal, das zweite Merkmal und die aerodynamische Neigung sowie gegebenenfalls die Geschwindigkeit relativ zur Luft des Hybridhubschraubers (10) in Beziehung zueinander setzen.

12. Verfahren nach einem der Ansprüche 1 bis 11,
**dadurch gekennzeichnet, dass** das erste Merkmal des mindestens einen Propellers (13) einen Befehl zum Steuern des Anstellwinkels der zweiten Blätter (131) des mindestens einen Propellers (13) oder einen Befehl zum Steuern eines ersten Schubs umfasst, der von dem mindestens einen Propeller (13) ausgeübt wird und teilweise zum Vortrieb des Hybridhubschraubers (10) beiträgt.

13. Verfahren nach einem der Ansprüche 1 bis 12,
**dadurch gekennzeichnet, dass** das zweite Merkmal des mindestens einen Hauptrotors (12) einen Anstellwinkel der Rotorscheibe des mindestens einen Hauptrotors (12) oder einen Befehl zur Steuerung eines von dem mindestens einen Hauptrotor (12) erzeugten zweiten Schubs umfasst.

14. Verfahren nach einem der Ansprüche 1 bis 13,
**dadurch gekennzeichnet, dass** das Verfahren einen zusätzlichen Schritt des Sperrens des Verfahrens umfasst, wenn die Flugphase des Hybridhubschraubers (10) nicht die stabilisierte Flugphase ist.

15. Verfahren nach Anspruch 14,
**dadurch gekennzeichnet, dass** eine nicht-stabilisierte Flugphase eingestellt wird, sobald eine der folgenden Bedingungen erfüllt ist:
- die aerodynamische Neigung des Hybridhubschraubers (10) ist nicht konstant,
- ein Lastfaktor des Hybridhubschraubers (10) ist nicht konstant,
- die Geschwindigkeit relativ zur Luft des Hybridhubschraubers (10) ist nicht konstant,
- ein Nickwinkel oder ein Rollwinkel des Hybridhubschraubers (10) ist nicht konstant,
- eine Vertikalgeschwindigkeit des Hybridhubschraubers (10) ist nicht konstant, oder
- eine von einem Piloten vorgenommene Einwirkung auf eine Flugsteuerung des Hybridhubschraubers (10) wird erfasst.

16. Verfahren nach einem der Ansprüche 1 bis 15,
**dadurch gekennzeichnet, dass** der Hybridhubschrauber (10) mindestens ein Leitwerk (17) mit mindestens einem beweglichen Abschnitt (171) zur Steuerung des Längsgleichgewichts des Hybridhubschraubers (10) umfasst, wobei das Verfahren einen zusätzlichen Schritt des Steuerns einer Ausrichtung des mindestens einen beweglichen Abschnitts (171) umfasst.

17. Verfahren nach einem der Ansprüche 1 bis 16,
**dadurch gekennzeichnet, dass** das Verfahren einen zusätzlichen Schritt des Reduzierens einer Drehgeschwindigkeit NR des mindestens einen Hauptrotors (12) umfasst.

18. Hybridhubschrauber (10) mit:
- einem Rumpf (11),
- mindestens einen Hauptrotor (12) mit einer Mehrzahl von ersten Blättern (121), der zumindest teilweise den Auftrieb und/oder den Vortrieb des Hybridhubschraubers (10) gewährleistet,
- mindestens einen Propeller (13) mit einer Mehrzahl von zweiten Blättern (131), der zumindest teilweise den Vortrieb des Hybridhubschraubers (10) gewährleistet,
- eine Autopilotvorrichtung (21),
- mindestens einem Sensor (25), der die Flugbedingungen des Hybridhubschraubers (10) bestimmt, und
- mindestens einem Rechner (22),
**dadurch gekennzeichnet, dass** der Rechner (22) konfiguriert ist, um die Schritte des Verfahrens nach einem der Ansprüche 1 bis 17 auszuführen.

## Claims

1. Method for reducing in-flight noise for a hybrid helicopter (10), said hybrid helicopter (10) including:
- at least one main rotor (12) provided with a plurality of first blades (121) and at least partially providing the lift and/or the forward propulsion of said hybrid helicopter (10);
- at least one propeller (13) provided with a plurality of second blades (131) and at least partially providing the forward propulsion of said hybrid helicopter (10);
- an autopilot device (21); and
- at least one calculator (22);
**characterized in that** said method includes the following steps:
- determining flight conditions of said hybrid helicopter (10) using at least one sensor (25) of said hybrid helicopter (10), said flight conditions including an air speed of said hybrid helicopter (10) and an aerodynamic slope of a trajectory followed by said hybrid helicopter (10);
- determining a first value of a first feature of said at least one propeller (13) according to a first database as a function of said flight conditions;
- determining a second value of a second feature of said at least one main rotor (12) according to a second database as a function of said first value of said first feature (13) so as to limit noise generation due to a vortex wake caused by each rotating first blade (121) of said at least one main rotor (12); and
- implementing a stabilized flight phase of said hybrid helicopter (10) by applying said first value of said first feature to said at least one propeller (13) and said second value of said second determined feature to said at least one main rotor (12).

2. Method according to Claim 1,
**characterized in that** said method for reducing noise is engaged:
- either by manoeuvring an engagement device (31), said engagement device (31) transmitting a signal to said calculator (22);
- or automatically as a function of the position of said hybrid helicopter (10) within a terrestrial frame of reference and/or of the distance between said hybrid helicopter (10) and the overflown ground.

3. Method according to any one of Claims 1 to 2, **characterized in that** said step of implementing said stabilized flight phase includes the following sub-step:
- automatically controlling said at least one propeller (13) according to said first value of said first feature and said at least one main rotor (12) according to said second value of said second feature by means of said autopilot device (21) of said hybrid helicopter (10).

4. Method according to Claim 3,
**characterized in that** said step of automatically controlling includes the following sub-steps:
- determining a first setpoint for controlling the pitch of said second blades (131) of said at least one propeller (13) as a function of said first value of said first feature;
- determining second setpoints for controlling the cyclic pitch and for controlling the collective pitch of said first blades (121) of said at least one main rotor (12) as a function of said second value of said second feature; and
- automatically controlling said at least one propeller (13) according to said first setpoint for controlling the pitch of said second blades (131) and said at least one main rotor (12) according to said second setpoints for controlling the cyclic pitch and for controlling the collective pitch of said first blades (121) by means of said autopilot device (21).

5. Method according to any one of Claims 1 to 2, **characterized in that** said step of implementing said stabilized flight phase includes the following sub-steps:
- determining a first setpoint to be applied to said at least one propeller (13) as a function of said first value of said first feature;
- determining at least one second setpoint to be applied to said at least one main rotor (12) as a function of said second value of said second feature; and
- displaying said first setpoint and said at least one second setpoint on a display device (23) of said hybrid helicopter (10).

6. Method according to Claim 5,
**characterized in that** said first setpoint is equal to said first value of the first feature and said at least one second setpoint is equal to said second value of the second feature.

7. Method according to Claim 5,
**characterized in that** said first setpoint includes an order for controlling the pitch of said second blades (131) of said at least one propeller (13) and said at least one second setpoint includes an order for controlling the cyclic pitch and an order for controlling the collective pitch of said first blades (121) of said at least one main rotor (12).

8. Method according to any one of Claims 1 to 7, **characterized in that** said stabilized flight phase includes a horizontal level flight with zero-slope, an upward flight with a positive non-zero aerodynamic slope or a downward flight with a negative non-zero aerodynamic slope.

9. Method according to any one of Claims 1 to 8, **characterized in that** said flight conditions also includes a current mass of said hybrid helicopter (10), a temperature outside said hybrid helicopter (10) and/or an outside atmospheric pressure.

10. Method according to any one of Claims 1 to 9, **characterized in that** said method includes a preliminary step of establishing databases, said databases including, on the one hand, said first database allowing said first values of said first feature of said at least one propulsion propeller (13) to be determined as a function of said values of said air speed of said hybrid helicopter (10) and of said aerodynamic slope and, on the other hand, said second database allowing said second values of said second feature to be determined as a function of said first values of said first feature.

11. Method according to Claim 10,
**characterized in that** said first database includes:
- either an array of first optimized curves associating said first feature and said air speed of said hybrid helicopter (10), each first optimized curve corresponding to said aerodynamic slope;
- or an array of optimized ranges, each optimized range associating said first feature and said air speed of said hybrid helicopter (10), each optimized range corresponding to said aerodynamic slope;
- or a digital simulation algorithm or one or more equations associating said first feature, said air speed of said hybrid helicopter (10) and said aerodynamic slope;
and said second database includes:
- either an array of second curves, each second curve associating said first feature and said second feature, each second curve corresponding to said aerodynamic slope;
- or a digital simulation algorithm or one or more equations particularly associating said first feature, said second feature and said aerodynamic slope, as well as optionally said air speed of said hybrid helicopter (10).

12. Method according to any one of Claims 1 to 11,
**characterized in that** said first feature of said at least one propeller (13) includes an order for controlling the pitch of said second blades (131) of said at least one propeller (13) or even an order for controlling a first thrust exerted by said at least one propeller (13) and partially contributing to the forward propulsion of said hybrid helicopter (10).

13. Method according to any one of Claims 1 to 12,
**characterized in that** said second feature of said at least one main rotor (12) includes an incidence of the rotor disc of said at least one main rotor (12) or even an order for controlling a second thrust exerted by said at least one main rotor (12).

14. Method according to any one of Claims 1 to 13,
**characterized in that** said method includes an additional step of inhibiting said method when said flight phase of said hybrid helicopter (10) is not one said stabilized flight phase.

15. Method according to Claim 14,
**characterized in that** a non-stabilized flight phase is established as soon as one of the following conditions is satisfied:
- said aerodynamic slope of said hybrid helicopter (10) is not constant;
- a load factor of said hybrid helicopter (10) is not constant;
- said air speed of said hybrid helicopter (10) is not constant;
- a pitch angle or a roll angle of said hybrid helicopter (10) is not constant;
- a vertical speed of said hybrid helicopter (10) is not constant; or
- an action undertaken by a pilot on a flight control of said hybrid helicopter (10) is detected.

16. Method according to any one of Claims 1 to 15,
**characterized in that** said hybrid helicopter (10) includes at least one stabilizer (17) provided with at least one movable segment (171) enabling the longitudinal balance of said hybrid helicopter (10) to be controlled, said method includes an additional step of controlling an orientation of said at least one movable segment (171).

17. Method according to any one of Claims 1 to 16, **characterized in that** said method includes an additional step of reducing a speed of rotation NR of said at least one main rotor (12).

18. Hybrid helicopter (10) including:
- a fuselage (11);
- at least one main rotor (12) provided with a plurality of first blades (121) and at least partially providing the lift and/or the forward propulsion of said hybrid helicopter (10);
- at least one propeller (13) provided with a plurality of second blades (131) and at least partially providing the forward propulsion of said hybrid helicopter (10);
- an autopilot device (21);
- at least one sensor (25) determining the flight conditions of said hybrid helicopter (10); and
- at least one calculator (22);
**characterized in that** said calculator (22) is configured to implement the steps of the method according to any one of Claims 1 to 17.
